# EUROPÄISCHE PATENTSCHRIFT

(11) **EP 1 544 227 B1**
(45) Veröffentlichungstag und Bekanntmachung des Hinweises auf die Patenterteilung: **02.04.2014**
(21) Anmeldenummer: 04029597.4
(22) Anmeldetag: 14.12.2004
(51) Int. Cl.: C08G 18/38, C08F 8/40, C08K 5/5313

(54) **Verwendung hydroxylgruppenhaltiger Phosphinate als und zur Herstellung von Flammschutzmitteln, die sich zur Einbindung in Polymerharze eignen, damit hergestellte neue Phosphinate mit organisch polymerisierbaren Gruppen sowie flammgeschützte Polymerharze**
Use of hydroxyl-groups containing phosphinates as flame retardant and in the preparation of flame retardants that can be used to be built into polymer resins, the phosphinates containing organic groups that can be polymerized prepared in this way as well as the flame retardant polymer resins.
Utilisation de phosphinates contenant des groupes de hydroxyle comme ignifuge et pour la préparation d'ignifuges, aptes à être incorporés dans les résines polymèriques, les phosphinates contenant des groupes organiques aptes à être polymérisés ainsi que les résines polymèriques ignifuges.

(30) Priorität: 17.12.2003 DE 10359269
(43) Veröffentlichungstag der Anmeldung: 22.06.2005
(73) Patentinhaber: Fraunhofer-Gesellschaft zur Förderung der angewandten Forschung e.V., 80686 München (DE)
(72) Erfinder: Bauer, Monika, 15754 Senzig (DE)
(74) Vertreter: Olgemöller, Luitgard Maria

(56) Entgegenhaltungen:
- EP-A- 1 090 922
- US-A- 4 016 222
- US-A1- 2003 171 466

## Beschreibung

Die vorliegende Erfindung betrifft die Verwendung insbesondere hydroxylierter Phosphinate zur Herstellung von als Flammschutzmittel geeigneten Derivaten mit organisch polymerisierbaren Gruppen, mit denen sie kovalent in Polymere einbaubar bzw. einpolymerisierbar sind, sowie zur unmittelbaren Herstellung von flammgeschützten Polymeren durch direktes Copolymerisieren dieser hydroxylierten Phosphinate mit entsprechenden Comonomeren oder Oligomeren bzw. durch deren Einpolymerisieren in entsprechende Polymermassen, wobei flammfeste und ggf. bruchzähe Polymere entstehen.

Phosphinsäurederivate (Phosphinate), deren Molekül eine organisch polymerisierbare Doppelbindung enthält, sind bekannt. Solche Verbindungen werden z.B. gemäß US 4,222,780 als Kleber für menschliche harte Gewebe wie Zähne oder Knochen eingesetzt. Aus der DE 197 46 708 C2 sind hydrolysestabile und polymerisierbare Acrylphosphonsäuren bekannt, die in wässriger Lösung hydrolysestabil sind und sich daher vor allem für Dentalmaterialien eignen. Sie sind nur sehr umständlich herstellbar. In der EP 1 090 922 A2 werden Derivate von 1:9,10-Dihydro-9-oxa-10-phenanthren-10-oxid (DOPO)vorgeschlagen, die ebenfalls Doppelbindungen enthalten können. Allerdings findet sich in dieser Druckschrift kein Hinweis darauf, wie man zu solchen Verbindungen gelangen könnte. Des weiteren beschreibt die DE 199 18 984 A1 Dentalwerkstoffe mit polymerisierbaren Phosphonsäuren, die sich sehr gut als Zahnfüllmaterialien eignen. Es handelt sich dabei um (Meth-)Acrylsäurephosphonsäurealkylester, die sich dadurch herstellen lassen, dass Phosphorsäuredialkylester mit doppelbindungshaltigen Ethern zu Monoalkylphosphonsäureestern umgesetzt werden, die, ggf. nach Hydrolyse, mit (Meth-)Acrylsäurechlorid zur Reaktion gebracht werden. Die Produkte werden anschließend einer Hydrolyse unterworfen. Dieser Herstellungsweg ist äußerst mühsam. Auch ist anzumerken, dass Phosphonsäurederivate weniger hydrolysestabil als Phosphinsäurederivate sind.

Ein in der Vergangenheit sehr häufig eingesetztes Flammschutzmittel für organische Polymere ist Decabromdiphenylether (DBDE). Seiner Verwendung stehen jedoch nicht nur ökologische Bedenken entgegen; auch seine UV-Stabilität lässt zu wünschen übrig. So verliert DBDE unter Sonneneinstrahlung einen Teil seiner Bromatome, was seine flammhemmende Wirkung verringert (Inez Hua et al., Environ. Toxicol. Chem. 22, 793 (2003)). Es ist auch seit langem bekannt, Phosphorverbindungen als Flammschutzmittel einzusetzen. Das japanische Abstract mit der Veröffentlichungsnummer 09124668 beschreibt die Herstellung einer Mischung verschiedener Methacrylsäureester einer Phosphinylpropionsäure durch Umesterung des entsprechenden Phosphinylpropionsäuremethylesters mit Hydroxyethylmethacrylat. Diese Methacrylsäurederivate können als Flammschutzmittel in entsprechende Harze einpolymerisiert werden und bluten nicht aus. Zwar sind diese Flammschutzmittel durch die kovalente Einbindung relativ homogen verteilbar und können im Harz nicht diffundieren; sie enthalten jedoch einen nur relativ geringen Phosphoranteil. Die erzielbare Flammschutzwirkung ist der gewichtsmäßigen Menge an Phosphor allerdings direkt proportional, so dass die Bereitstellung von Molekülen mit höheren Gewichtsanteilen Phosphor wünschenswert wäre.

Aufgabe der vorliegenden Erfindung ist es, einen verbesserten Flammschutz für organische Polymere bereitzustellen, und zwar durch Verbindungen, die einen hohen Phosphoranteil besitzen und je nach Bedarf entweder mit organischen, polymerisierbare Gruppen aufweisenden Monomeren oder Oligomeren umsetzbar sind, die ihrerseits als Flammschutzmittel mit Comonomeren oder -oligomeren zu den genannten organischen Polymeren polymerisierbar sind, oder aber direkt in entsprechende Polymere einpolymerisierbar sind. In spezifischen Ausgestaltungen der Erfindung lassen sich mit diesen Verbindungen nicht nur ein verbesserter Flammschutz, sondern auch andere Eigenschaften der damit erhaltenen organischen Polymere erzielen. Die erfindungsgemäß erzeugten Verbindungen sowie die daraus gewonnenen polymerisierbaren Produkte sollen eine nur geringe Hydrolyseempfindlichkeit aufweisen. Die organisch reaktive Gruppe sollte eine relativ große Nähe zum Phosphoratom aufweisen, damit relativ kurzkettige Produkte mit relativ hohem Phosphorgehalt hergestellt werden können. In einer spezifischen Ausgestaltung der Erfindung sollen organisch polymerisierbare Produkte zur Verfügung gestellt werden, mit denen sich elektronenstrahl-härtbare Reaktivharze erzeugen lassen, die nach Härtung bruchzähe und flammfeste Polymere ergeben.

Diese Aufgabe wird durch den Vorschlag gelöst, Hydroxygruppen enthaltende Phosphinate der allgemeinen Formel (I)

[(R¹O)(R²)P(O)-(CHR³)ₘ-CR⁵(OH)]ₙR⁴ (I)

worin
R¹ und R² unabhängig voneinander eine gegebenenfalls substituierte Alkyl-, Aryl-, Arylalkyl-, Alkylaryl oder Alkylarylalkylgruppe mit vorzugsweise 1 bis 20 Kohlenstoffatomen darstellen,
R³ und R⁵ jeweils unabhängig voneinander Wasserstoff oder eine gegebenenfalls substituierte Alkyl-, Aryl-, Arylalkyl-, Alkylaryl oder Alkylarylalkylgruppe mit vorzugsweise 1 bis 20 Kohlenstoffatomen ist,
R⁴ Wasserstoff oder ein organischer Rest mit mindestens einem und vorzugsweise bis zu etwa 40 bis 50 Kohlenstoffatomen darstellt, der n-fach mit dem phosphorhaltigen Rest substituiert ist und ggf. weitere Substituenten trägt, wobei im Rest R⁴ dann, wenn er mehr als ein Kohlenstoffatom enthält, benachbarte Kohlenstoffatome einer Kohlenstoffkette durch Sauerstoffatome, Schwefelatome oder Aminogruppen unterbrochen sein können,
m gleich 0 oder 1 ist und
n eine ganze Zahl von 1 bis 6 darstellt, wobei dann, wenn n mehr als 1 ist, R⁴ nicht Wasserstoff sein darf,
als Verbindungen einzusetzen, die diesen Flammschutz direkt oder indirekt verleihen können, und zwar dadurch, dass sie entweder direkt in ensprechende Polymere eingebaut werden, oder aber dadurch, dass mit ihrer Hilfe neue Verbindungen synthetisiert werden, die gewünschte polymerisierbare Gruppen tragen, mit denen sie sich in entsprechende Polymere einarbeiten lassen. Hydroxygruppen sind gut geeignet, um als Kopplungsgruppen gewünschte Reste in Verbindungen einzuführen, die solche organisch polymerisierbare Gruppen tragen und daher in organisch Polymere eingebunden werden können, z.B. über Esterbindungen mit organischen Säuregruppen. Außerdem lassen sie sich über Veresterungsreaktionen oder dgl. direkt in Polymere einbinden. Die erfindungsgemäß vorgeschlagenen Hydroxyphosphinate zeichnen sich dadurch aus, dass sie nur ein oder zwei Kohlenstoffatome zwischen dieser Kopplungsgruppe und dem Phosphoratom enthalten und damit einen hohen Phosphor-Gewichtsanteil besitzen können, wass die Flammschutzwirkung verbessert.

Die Reste R¹ und R² können gegebenenfalls Heteroatome wie Silicium, Stickstoff, Phosphor, Sauerstoff, Schwefel, Halogene oder metallorganische Fragmente enthalten. Vorzugsweise enthält mindestens einer dieser beiden Reste einen Arylrest oder ist eine Phenylgruppe. Stärker bevorzugt sind Verbindungen der Formel (I), in denen die Kohlenstoffatome der Reste R¹ und R² miteinander verbunden sind, beispielsweise unter Bildung eines Oxaphosphaphenanthren-, -hexan- oder -benzolsystems. Ganz bevorzugt handelt es sich bei dem Rest (R¹O)(R²)P(O) um ein Derivat von 1:9,10-Dihydro-9-oxa-10-phosphaphenanthren-10-oxid (DOPO), wobei der Rest 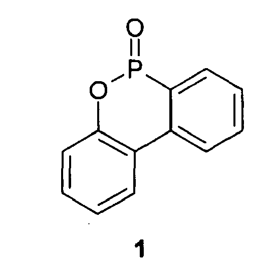 über eine fünfte, freie Valenz am Phosphor an den Molekülteil
-(CHR³)ₘ-CH(OH)]ₙR⁴ gebunden ist. DOPO ist eine nicht toxische, Langzeit-lagerstabile Substanz.

In einer anderen ebenfalls stärker bevorzugten Ausführungsform sind die Reste R¹ und R² unabhängig voneinander ausgewählt unter Methyl, Ethyl, Propyl, Cyclohexyl und Phenyl, oder sie bilden zusammen den oben beschriebenen Rest DOPO.

R³ und R⁵ sind unabhängig voneinander vorzugsweise Wasserstoff, Methyl oder Ethyl. Die Substituenten Wasserstoff und Methyl sind bevorzugt, Wasserstoff ist für beide Gruppen ganz besonders bevorzugt.

R⁴ enthält vorzugsweise eine oder mehrere Ether- oder Thioethergruppe(n) oder sekundäre Aminogruppe(n). In spezifischen Ausgestaltungen weist R⁴ Strukturelemente auf, die sich von C₂-C₆-Alkandiolen, der Trimethylolpropangruppe, der Pentaerythritgruppe, der Glycerolstruktur oder einem Cyclohexandimethanol oder von den entsprechenden Aminverbindungen ableiten. In einer anderen Ausgestaltung der Erfindung weist R⁴ als Strukturelement eine Bisphenol-A-Gruppe auf. R⁴ kann geradkettige, verzweigtkettige, cyclische, aliphatische, aromatische oder heteroaromatische Gruppen aufweisen, welche weiterhin metallorganische Fragmente enthalten können (z.B. Ferrocenylfragmente, Si-, Al-, Ti-organische Reste). Beispielhaft seien angeführt:
Methoxyalkyl, (Anzahl der Methoxygruppen 1-10, vorzugsweise 1, 2, 3 oder 4; C-Alkyl 1-40)
Methoxyaryl, (Anzahl der Methoxygruppen 1-10, vorzugsweise 1, 2, 3 oder 4; C-Aryl 1-40)
Methoxyalkylaryl, (Anzahl der Methoxygruppen 1-10, vorzugsweise 1, 2, 3 oder 4; C-Alkyl-Aryl 1-40) 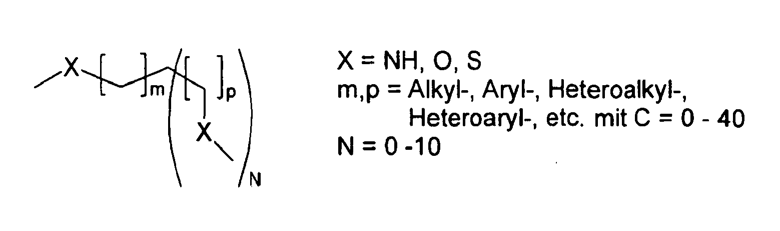
n ist vorzugsweise größer 1 und besonders bevorzugt 2, 3 oder 4.

Besonders günstige Phosphinate der vorliegenden Erfindung besitzen relativ leichte Substituenten, wodurch der relative Phosphoranteil steigt. Für den Einsatz als Flammschutzmittel ist es günstig, wenn der Phosphorgehalt dieser Verbindungen bei etwa 1 bis 32 Gew.-%, vorzugsweise bei etwa 5 - 20 Gew.-%, bezogen auf das Gesamtgewicht der Verbindungen der Formel (I), liegt. Günstig sind daher beispielsweise Verbindungen, in denen m null ist und R³ Wasserstoff ist. Außerdem ist es unter diesem Aspekt bevorzugt, dass R⁴ pro n phosphorhaltigem Substituenten eine möglichst geringe Anzahl von C-Atomen enthält, z.B. nicht mehr als 9, vorzugsweise nicht mehr als 5 oder sogar 3 C-Atome, wodurch der relative Phosphoranteil steigt.

Die Phosphinate der Formel (I) lassen sich auf mehreren Wegen darstellen. Einige davon sind bereits in der Literatur beschrieben.

Beispielsweise reagieren Glycidylether- oder Glycidylamingruppen tragende Verbindungen mit Phosphinsäureerivaten insbesondere in Gegenwart von Triethanolamin (TMA) unter Öffnung des Dreirings zu den entsprechenden Phosphinsäurealkoholen. So werden durch Umsetzung von n mol Phosphin der allgemeinen Formel (II)

(R¹O)(R²)P(O)H (II)

mit einem Epoxid der Formel (III)

[(CH₂-CHR³―O)]ₙR⁴ (III)

worin die Reste und Indices die oben für Formel (I) angegebene Bedeutung haben, Phosphinate der Formel (I) erhalten, worin R⁵ Wasserstoff bedeutet und m gleich 1 ist.

Diese Reaktion sei anhand der Umsetzung von DOPO mit einem Epoxid mit n Epoxidgruppen nachstehend beispielhaft dargestellt:

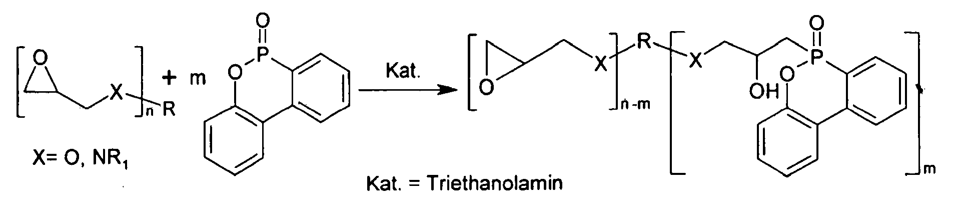

Beispielhaft seien nachstehend einige Verbindungen der Formel (I) angegeben:

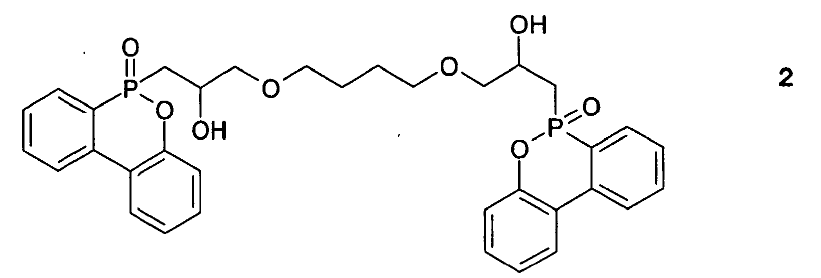

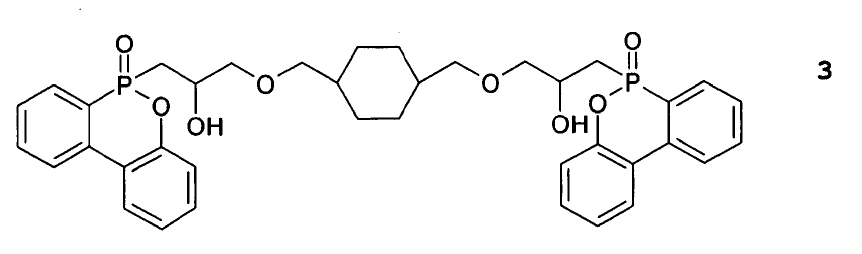

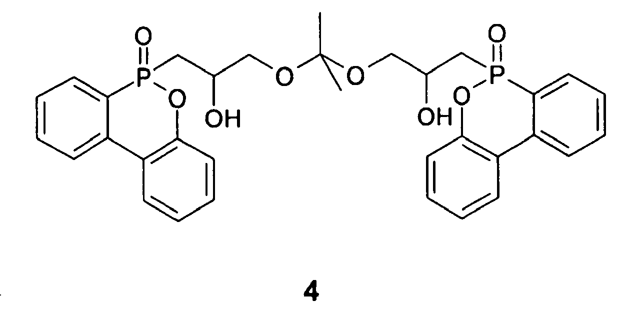

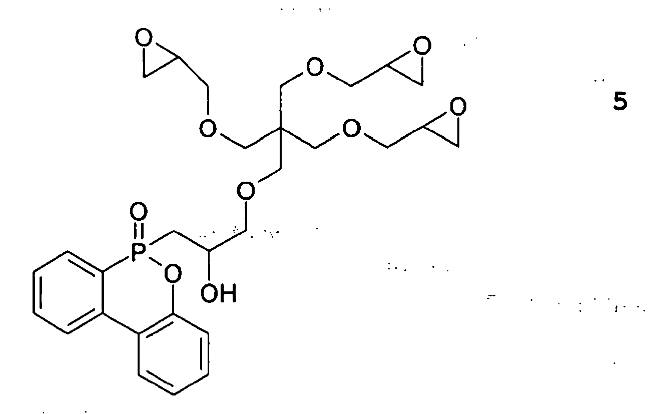

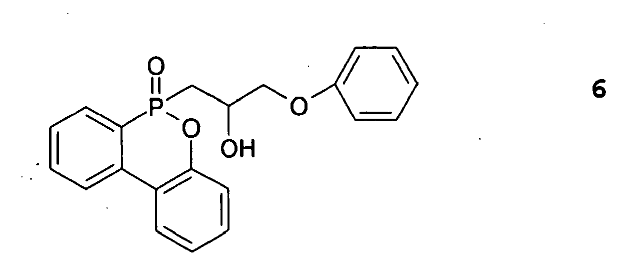

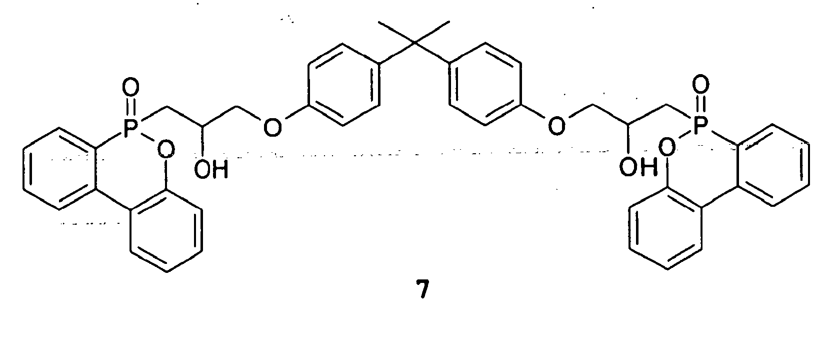

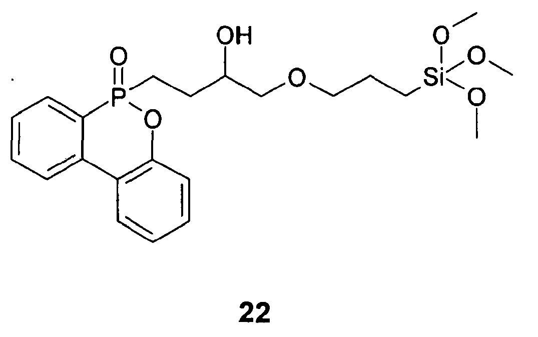

Verbindung **7** ist in der Literatur bereits beschrieben worden (C. S. Wang, C. H. Lin, J. Polym. Sci. A: Polym. Chem., 1999, 37, 3903-3909). Weiterhin findet sich in der JP-Anmeldung (JP Pat. Kokai 10-7766, 1998) eine Darstellung der Umsetzung mit reinem Oxiran und DOPO. Ähnliche Alkoholsysteme sind beschrieben bei: C. H. Lin, C. S. Wang Polymer, 2001, 42,1869-1878 und bei M. J. Alcon, M. A. Espinosa, V. Cadiz Macromol. Rapid Commun. 2001, 22, 1265-1271.

Phosphinsäurederivate reagieren auch mit Aldehyden und Ketonen nach folgenden Schema.

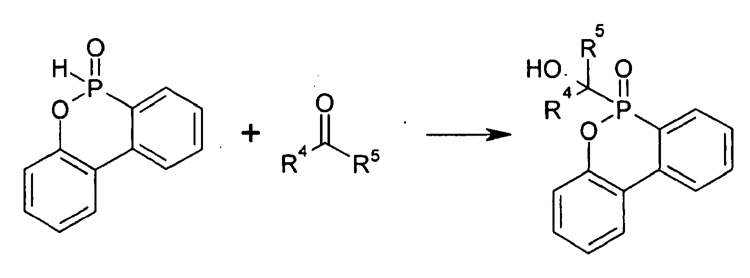

In einer zweiten Variante werden dementsprechend Phosphinsäurederivate der Formel (II)

(R¹O)(R²)P(O)H (II)

mit einem Aldehyd oder Keton (IV)

R⁴R⁵CO (IV)

umgesetzt, worin R⁴ und R⁵ wie für Formel (I) angegeben und insbesondere Wasserstoff oder eine Alkylgruppe mit vorzugsweise nicht mehr als 4 Kohlenstoffatomen sind, unter der Bedingung, dass R⁴ und R⁵ nicht gleichzeitig Wasserstoff sein können, und die übrigen Reste die für Formel (I) angegebene Bedeutung besitzen, wobei man Phosphinate der Formel (I) erhält, worin m null ist.

Das Prinzip dieser Umsetzung von DOPO mit Ketonen ist bekannt. Es wurde von Y. L. Liu in J. Appl. Polym. Science, 2002, 83, 1697-1701, beschrieben. Die Umsetzung von DOPO mit Paraformaldehyd (Polyoxymethylen) ist ebenfalls bekannt; sie wurde beschrieben in der folgenden Literatur: J.-Y. Shieh, C.-S. Wang, Polymer 42, 2001, 7617-7625.

Mit dieser Umsetzung lässt sich zum Beispiel eine Gruppe von Verbindungen mit der nachstehenden Struktureinheit erhalten:

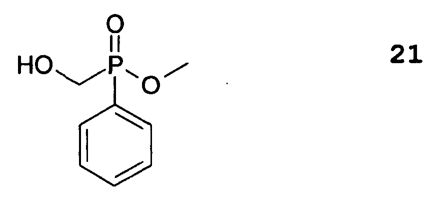

Die so erhältlichen Verbindungen der Formel (I) zeichnen sich gegenüber denjenigen mit m gleich 1 durch eine höhere Flammschutzeffizienz aus, da sie bei vergleichbarer Molekülstruktur einen höheren Phosphorgehalt besitzen.

Aus Phosphinaten der Formel (I) lassen sich erfindungsgemäß Phosphinate der Formel (V)

[(R¹O)(R²)P(O)-(CHR³)ₘ-CH(OR*)]ₙR⁴ (V)

herstellen, worin OR* ein eine Estergruppe oder eine Urethangruppe enthaltender und über diese Gruppe an den Rest des Moleküls gekoppelter, in ein organisches Polymer einbindbarer Rest ist und die übrigen Reste und Indices die gleiche Bedeutung wie für Formel (I) (einschließlich der als bevorzugt angegebenen Bedeutungen, die auch für die Formeln (V) als bevorzugt angesehen werden sollen) besitzen. Unter organischer Einbindbarkeit soll dabei sowohl eine radikalische Polymerisation als auch eine Polymerisation mit ionischem Mechanismus wie Ester- oder Amidbildung verstanden werden.

Die Einbindbarkeit von OR* in organische Polymere resultiert vorzugsweise aus dem Vorhandensein von polyaddierbaren und/oder polykondensierbaren Gruppen, insbesondere (Meth)Acrylatgruppen oder anderen über Doppelbindungen polymerisierbaren Gruppen, insbesondere Michaelsystemen, die in (Meth)Acrylatharze eingearbeitet werden können, von Hydroxyl- und insbesondere Carboxylgruppen, die ein Einkondensieren in Polyesterharze gestatten, oder von Silangruppen, die eine Einbindung in siliconbasierte Reaktivharze ermöglichen.

Infolge der Möglichkeit, Verbindungen mit der Formel (V) in organische Polymere einzubinden, eignen sich auch diese als Flammschutzmittel. Für eine Anwendung hierfür, beispielsweise durch Einpolymerisieren in die jeweiligen organischen Massen, sollten sie bevorzugt einen Phosphorgehalt im Bereich von 1 bis 32 Gew.-%, stärker bevorzugt von 5 bis 20 Gew.-% aufweisen, bezogen auf das Gesamtgewicht der jeweiligen Verbindung (V).

Die Herstellung von Verbindungen der Formel (V), worin OR* eine (Meth)Acrylatgruppe umfasst, gelingt sehr elegant und bequem durch Umsetzung eines aktivierten Derivates der (Meth)Acrylsäure selbst, z.B. mit (Meth)Acrylsäurechlorid, vorzugsweise in Gegenwart eines basischen Katalysators wie Triethylamin. Man erhält Verbindungen der Formel (VI)

[(R¹O)(R²)P(O)-(CHR³)ₘ-CH{O(O)C-CR⁶=CH₂}]ₙR⁴ (VI)

mit R⁶ gleich Wasserstoff oder Methyl, wobei die übrigen Reste und Indices die für Formel (I) angegebene Bedeutung haben.

Beispielhaft seien nachstehende Verbindungen der Formel (VI) aufgezeigt:

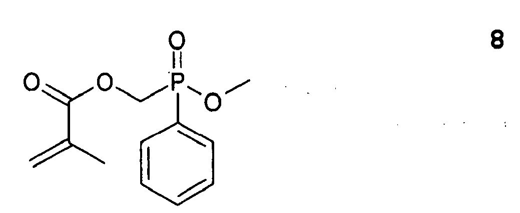

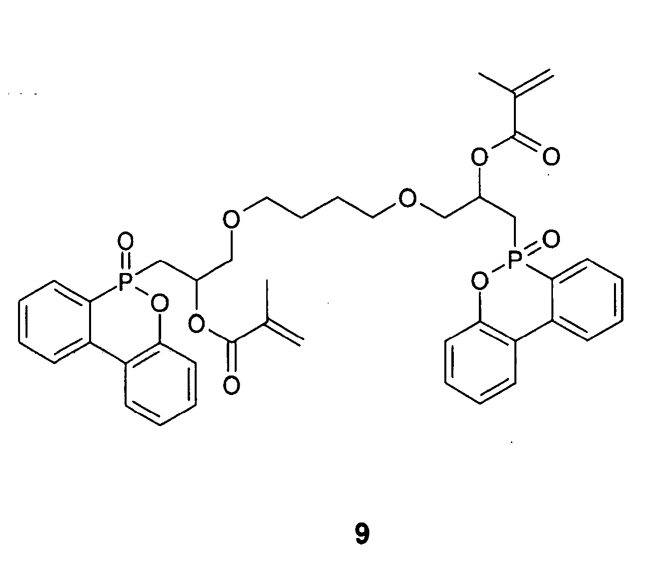

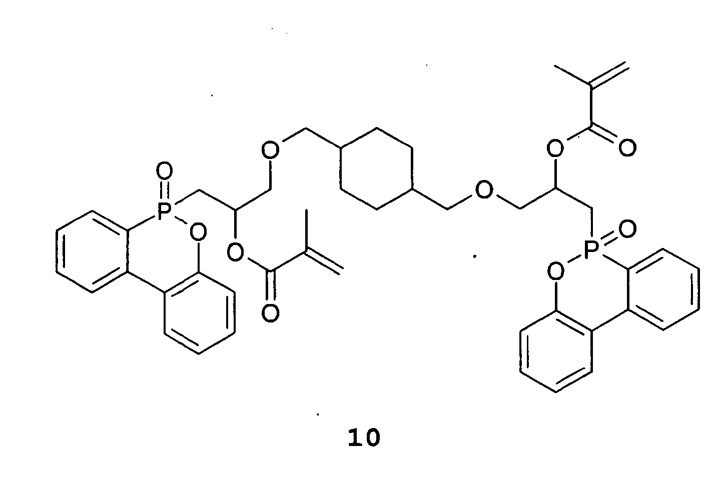

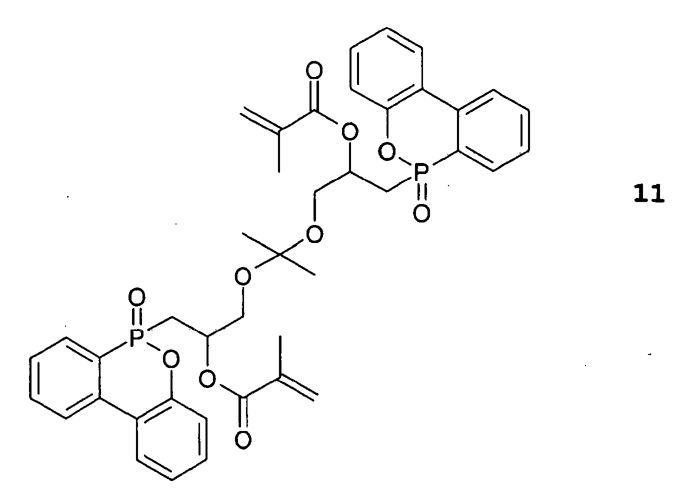

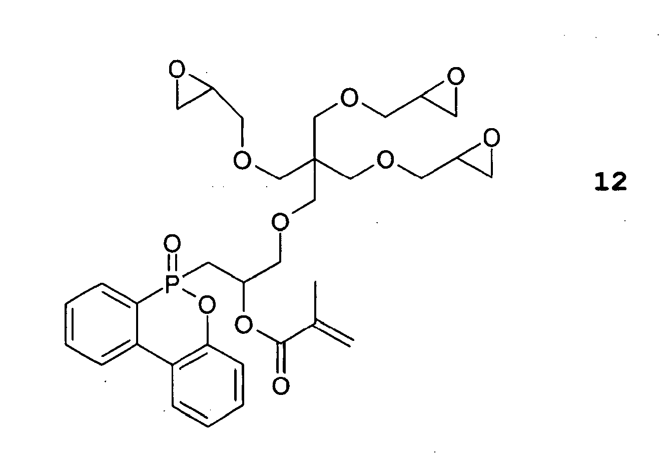

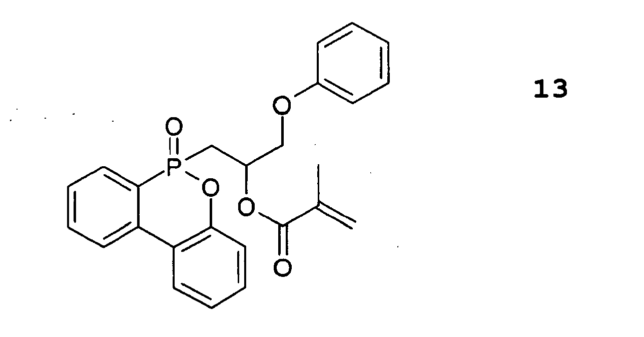

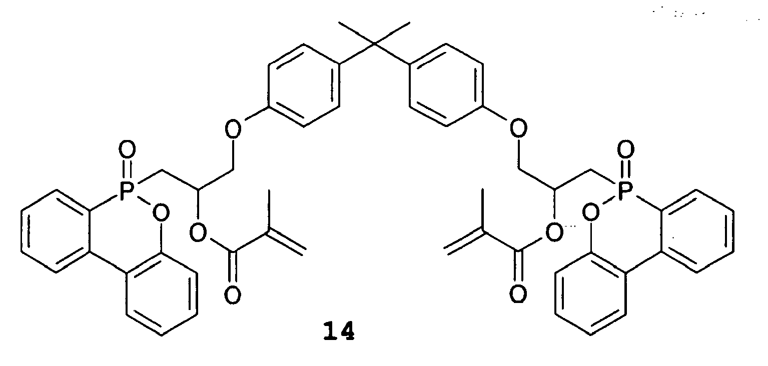

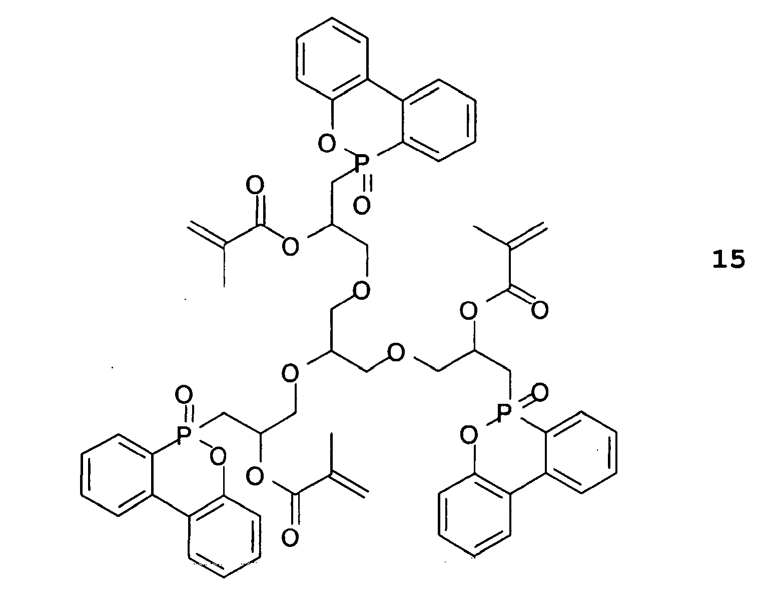

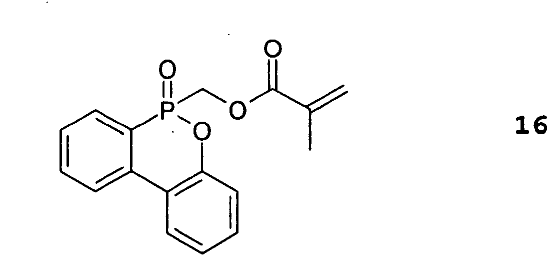

Statt dessen können natürlich auch (Meth)Acrylsäurederivate mit aktivierten Säuregruppen eingesetzt werden, deren (Meth)Acrylatgruppe(n) nicht oder nur zum Teil direkt an der Umsetzung beteiligt sind, wobei man Verbindungen der Formel (VII)

[(R¹O)(R²)P(O)-(CHR³)ₘ-CH{-O(O)C-R**}]ₙR⁴ (VII)

erhält, worin R** der oben als neben der Ester- oder Urethangruppe vorhandene Bestandteil von OR* genannte, organisch einbindbare Rest ist, der im konkreten Falle eine oder mehrere (Meth)Acrylatgruppen trägt, und die übrigen Reste und Indices die für Formel (I) angegebene Bedeutung besitzen.

(Meth)Acrylsäurederivate können aber nicht nur über eine aktivierte Säuregruppe an ein Phosphinat der Formel (I) angekoppelt werden, sondern auch über eine Urethangruppe. Damit lassen sich unter vielen anderen z.B. auch Silangruppen Si(R⁸)₃ einbinden, worin R⁸ gleich oder verschieden sein kann und ggf. substituiertes Alkyl, Aryl, Arylalkyl, Alkylaryl, Alkoxy, Aryloxy oder Arylalkoxy mit vorzugsweise 1 bis 10 Kohlenstoffatomen für arylfreie Gruppen und vorzugsweise 6 bis 18 Kohlenstoffatomen für arylhaltige Gruppen und ganz bevorzugt Methyl, Ethyl oder ein C₁-C₆-Alkoxy ist. Die Bildung von Urethan-Kopplungsgruppen gelingt durch Umsetzung von Phosphinaten der Formel (I) mit Isocyanaten, was wiederum beispielhaft anhand der Umsetzung mit einem Phosphinat der Formel (I) gezeigt sei, in dem m gleich 0 ist:

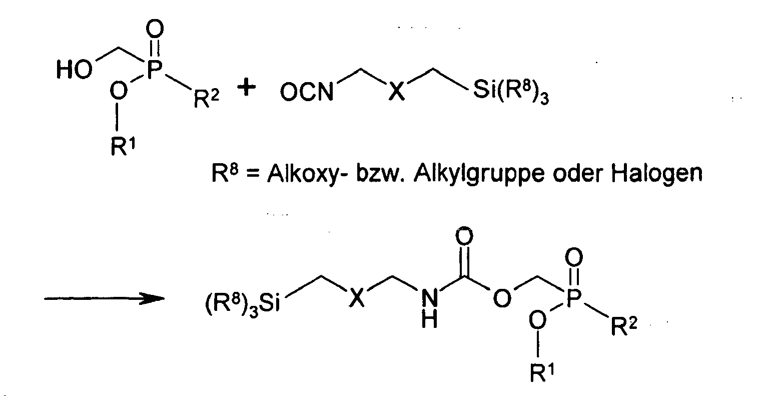

In diesem Schema steht X wie im obigen Schema für eine ggf. substituierte Alkylenoder Arylen- oder sonstige Gruppe, die nicht mit dem Alkoholatrest des Phosphinats reagieren kann.

Man erhält auf diese Weise Phosphinate der Formel

[(R¹O)(R²)P(O)-(CHR³)ₘ-CH{-O(O)C-NH-R**}]ₙR⁴ (X)

worin die Reste und Indices die oben angegebenen Bedeutungen besitzen,
und insbesondere Phosphinate der Formel (XI):

[(R¹O)(R²)P(O)-(CHR³)ₘ-CH{-O(O)C-NH-R⁷-Si(R⁸)₃}]ₙR⁴ (XI)

worin R⁷ für eine ggf. substituierte Alkylen- oder Arylengruppe mit vorzugsweise 1 bis 20 Kohlenstoffatomen oder eine sonstige Gruppe steht, die nicht mit dem Alkoholatrest des Phosphinats der Formel (I) reagieren kann, beispielsweise ein durch ein Heteroatom unterbrochener Alkylen- oder Arylenrest, und worin die sonstigen Reste und Indices die oben angegebenen Bedeutungen besitzen.

Beispielhaft sei die nachstehende Verbindungen der Formel (XI) aufgezeigt:

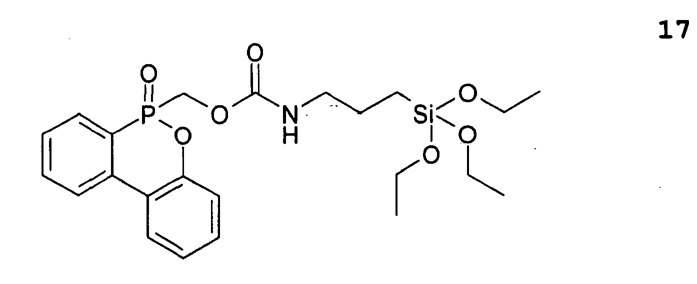

Anstelle von Silylgruppen können die mit dem Hydroxyphosphinat reagierenden Isocyanate selbstverständlich eine oder mehrere andere beliebige polymerisierbare Gruppe(n) tragen wie beispielsweise (Meth)Acrylate, Olefine, etc.. Durch die Verwendung von Di- oder Multiisocyanaten mit multihydroxyhaltigen Phosphinaten können Polyurethane (linear bzw. verzweigt) direkt flammfest gemacht werden, z.B. nach folgendem Schema:

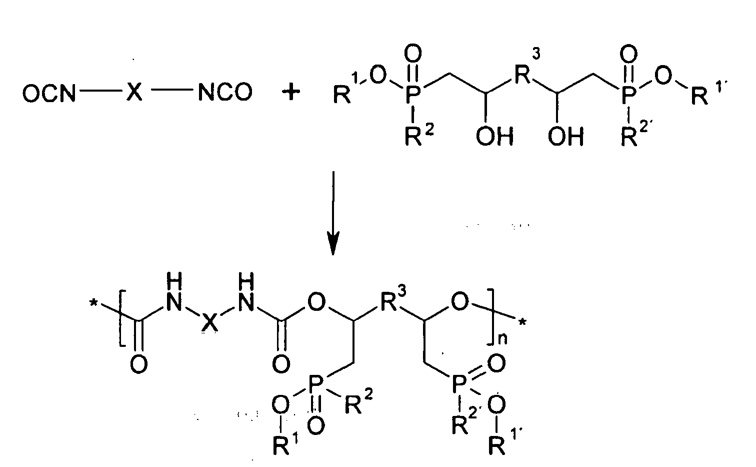

Auch in diesem Schema steht X wieder für eine ggf. substituierte Alkylen-, Arylen- oder sonstige Gruppe, die nicht ins Reaktionsgeschehen eingreifen kann.

Wird die Einbindung flammhemmender Phosphinate in Polyester oder Polyamide gewünscht, so kann die Hydroxygruppe so modifiziert werden, dass das Phosphinat eine Carboxyfunktion trägt, beispielsweise eine -COOH-Gruppe oder eine aktivierte Säuregruppe wie ein Säurechlorid. Diese Modifikation gelingt beispielsweise durch Umsetzung mit einem kurzkettigen Anhydrid unter Ausbildung einer über eine Estergruppe gebundenen Säurefunktion oder durch Phosgenierung der Hydroxygruppe zu einem Säurechlorid. Auch die Ausbildung einer Aminfunktion (z.B. zum Einbau in Polyamide) ist möglich, beispielsweise durch eine weitere Reaktion der wie oben erzeugten Carboxyfunktion mit Diaminen.

Man erhält auf diese Weise Phosphinate der Formel (XII)

[(R¹O)(R²)P(O)-(CHR³)ₘ-CH{-O(O)C-(CR³R⁵)ₚ-C(O)OH}]ₙR⁴ (XII),

der Formel (IX)

[(R¹O)(R²)P(O)-(CHR³)ₘ-CH{-O(O)C-(CR³R⁵)ₚ-C(O)NH-R⁷NH₂}]ₙR⁴ (IX)

beziehungsweise der Formel (XIII)

[(R¹O)(R²)P(O)-(CHR³)ₘ-C(O)CI]ₙR⁴ (XIII),

worin p gleich 0 bis vorzugsweise 4 ist und die übrigen Reste und Indices die oben angegebenen Bedeutungen besitzen.

Darüber hinaus können hydroxylgruppenhaltigen Phosphinate, falls sie zwei oder mehr Hydroxylgruppen enthalten, direkt in Polyester einpolymerisiert werden. Eine Umsetzung erfolgt in diesem Fall mit aliphatischen oder aromatischen Dicarbonsäuren oder deren Anhydriden:

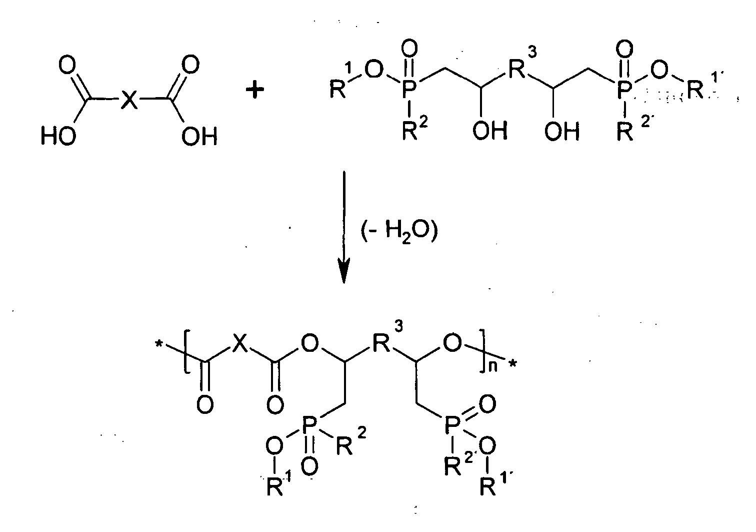

Phosphinate mit nur einer Hydroxygruppe können ebenfalls eingesetzt werden; sie besitzen neben der Flammschutzwirkung die Eigenschaft von Zähigkeitsmodifikatoren, da sie Kettenabbrüche induzieren.

Derartige Polyester können bei entsprechender Funktionalisierung weitere Comonomere bzw. -polymere enthalten, wie zum Beispiel Styrol im Fall von ungesättigten Polyesterketten.

Cyanatharze lassen sich ebenfalls durch Einbau von hydroxylgruppenhaltigen Phosphinaten bezüglich ihrer Flammfestigkeit verbessern. Gleichzeitig kommt es in Fall von Monohydroxysystemen zu einer teilweisen Unterbrechung der Netzwerkstruktur, so dass das Flammschutzmittel gleichzeitig die Aufgabe eines Zähmodifikators übernimmt. Eine schematische Abbildung der Reaktion von Dicyanatmonomeren mit monohydroxylgruppenhaltigen Phosphinaten stellt sich wie folgt dar, wobei es zur Ausbildung von Triazinsystemen kommt. Weiterhin muss der Alkoholeinbau nicht zwingend nur an einem Ringsystem erfolgen, sondern kann sich auch über zwei Triazinringe verteilen, so dass diese dann zwar nicht mehr als dreifach vernetzendes System fungieren können, jedoch immer noch zweifach verbrückend wirken.

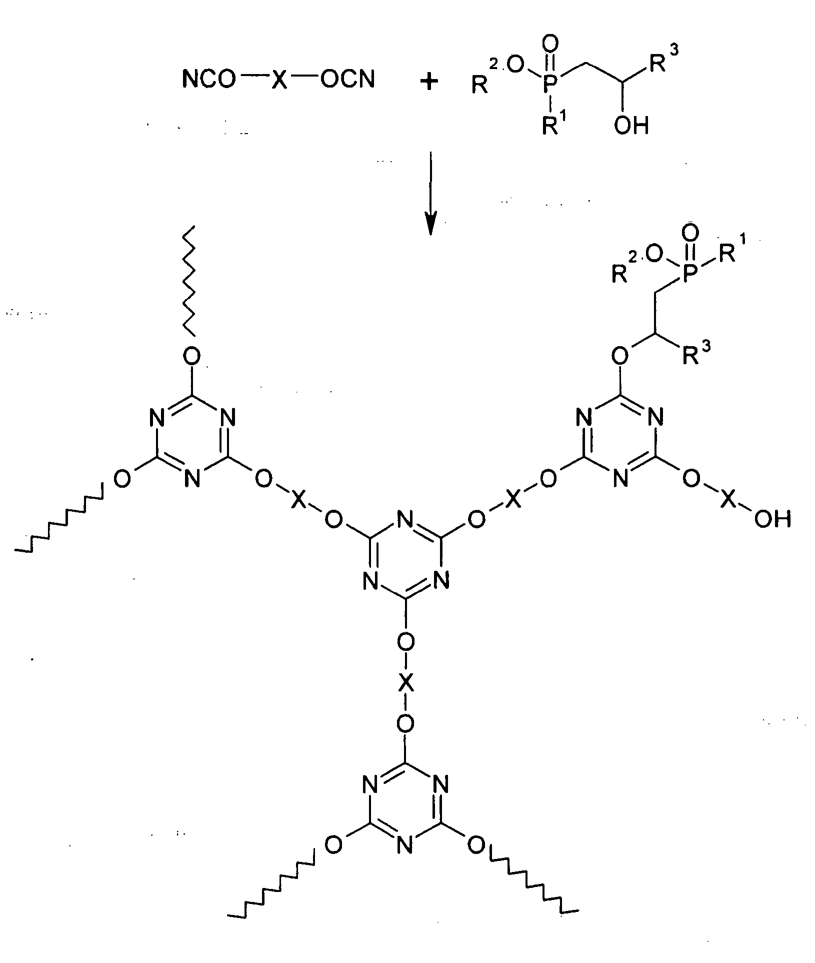

Typische Beispiele für Dicyanatsysteme sind im folgenden aufgezeigt:

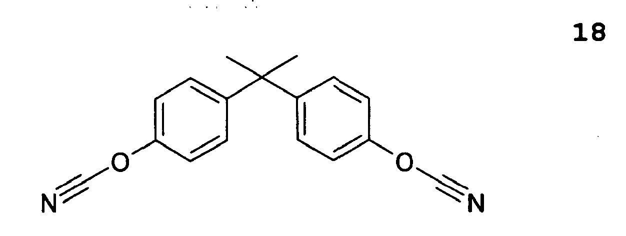

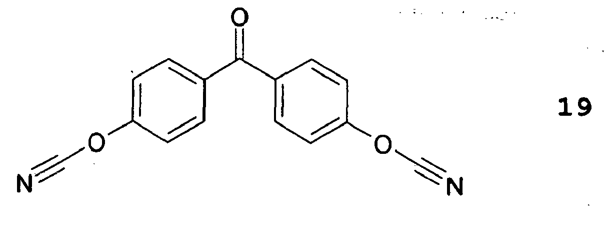

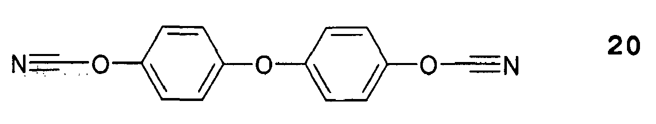

Die erfindungsgemäßen (Meth)Acrylat-Phosphinate lassen sich direkt in (Meth)Acrylatharze, insbesondere sogenannte Reaktivharze, einpolymerisieren. Damit lässt sich phosphorhaltiges Flammschutzmittel kovalent in duromere Poly(meth)acrylate einbinden. Der Einbau dieser Verbindungen kann thermisch oder mit Hilfe von UV- oder Elektronenbestrahlung erfolgen, was die Phosphinate geeignet erscheinen lässt, in entsprechende Harze wie z.B. solchen aus Ebecrylen (z.B. von ucb Chemicals, Drogenbos (Belgien), das sind verschiedene (Meth)acrylatester von Bisphenol A, Urethan und dgl.) einpolymerisiert zu werden. Weiterhin können die Phosphinate radikalisch oder katalytisch initiiert in entsprechende Polymere eingebaut werden. Diese müssen nicht notwendigerweise ebenfalls (Meth)Acrylatgruppen aufweisen; sie können auch andere auf die genannte Weise polymerisierbare aktivierte Doppelbindungen besitzen wie z.B. Triallylisocyanurat. Monofunktionalisierte Systeme können auch als kovalent einbaubare Flammschutzmittel in Thermoplaste wie PMMA, Polystyrol, etc. dienen. Es hat sich herausgestellt, dass die Flammfestigkeit dann zufrieden stellend war (z.B. UL 95-VO), wenn die erfindungsgemäßen Phosphinate in einer Menge zugegeben wurden, die einem Gewichtsanteil von etwa 2 % Phosphor entspricht. (Meth)Acrylathaltige Harze zeichnen sich durch hohe Temperaturbeständigkeit (beispielsweise hohe Glasübergangstemperaturen), sowie eine geringe Rauchgasdichte und eine niedrige Toxizität im Brandfall aus. Durch geeignete Wahl der Copolymere ist es möglich, den Brechungsindex gezielt einzustellen und in breitem Rahmen zu variieren. Die hohe Transparenz der Harze ermöglicht optische Anwendungen von der Beschichtung bis zum Wellenleiter.

Beispiele von Comonomeren, mit denen die erfindungsgemäßen Verbindungen polymerisiert werden können, sind Ebecryl® 284, ein aliphatisches Urethan-Diacrylat-Oligomer, verdünnt mit einem Hexandioldiacrylat,
Ebecryl® 600 : 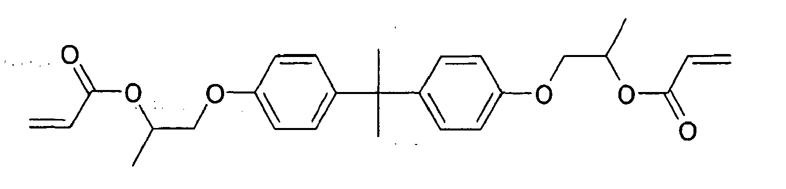 Ebecryl® 610 : 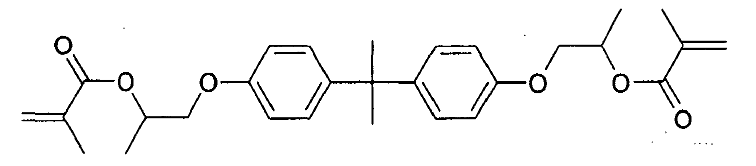 oder Triallylisocyanurat:

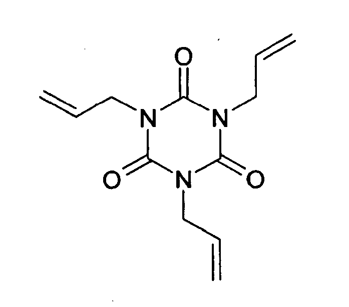

Silangruppenhaltige erfindungsgemäße Phosphinate lassen sich durch hydrolytische Kondensation in Siloxanharze einbauen. Auch eine Oberflächenmodifizierung silanhaltiger Oberflächen ist mit diesen Phosphinaten möglich.

Um eine ausreichende Flammfestigkeit der erhaltenen Polymerharze zu gewährleisten, ist es wünschenswert, dass die Verbindungen der Formeln (I) bzw. (V) in einer solchen Menge eingesetzt werden, dass der Phosphorgehalt des damit erhaltenen, jeweiligen Polymerharzes im Bereich von etwa 0,1 bis 10 Gew.-%, bevorzugt im Bereich von etwa 1 bis 5 Gew.-%, bezogen auf das Gewicht des Polymerharzes, liegt.

Durch den Zusatz von Füllstoffen, beispielsweise ggf. mit einem Melaminharz verkapseltem Ammoniumpolyphosphat oder Aluminiumtrihydroxid (ATH) und/oder Mikro- und/oder Nanopartikeln (beispielsweise anorganische Oxide (SiO₂, TiO₂, Al₂O₃, ZrO₂,etc.) Carbide (z. B. SiC), Nitride (z. B. BN), Carbonnanotubes, etc.), lässt sich sowohl die Flammfestigkeit als auch die Bruchzähigkeit der erhaltenen Komposite weiter steigern. Sämtliche Reaktivharze, eignen sich z.B. als Matrixharze für Faserverbundwerkstoffe.

Nachstehend soll die Erfindung anhand von Beispielen näher erläutert werden.

### Beispielgruppe 1

Umsetzung von Glycidylether- oder Glycidylamingruppen tragenden Verbindungen mit einem Phosphinat

### Beispiel 1.1 Umsetzung von 1,4-Butandiol-diglycidether (Polypox® R3 ; UPPC AG, Mietingen-Baltringen, Deutschland) mit Dihydro-9-oxa-10-phenanthren-10-oxid (DOPO)

In einem 100 ml-Dreihalskolben werden 74,2 mmol 1,4-Butandiol-diglycidether, 48,5 mmol Dihydro-9-oxa-10-phenanthren-10-oxid (DOPO) und 0,31 g Triethanolamin unter Rühren auf 130°C erhitzt. Nach Reaktionsstart (Temperaturerhöhung im Reaktionsgefäß) wird die zweite Charge DOPO (48,5 mmol) hinzugegeben, bis erneut eine Temperaturanstieg zu beobachten ist. Fällt dieser wiederum ab gibt man das restliche DOPO (48,5 mmol) hinzu, welches zur vollständigen Umsetzung der Glycidethergruppen benötigt wird. Das Reaktionsgemisch wird auf 140°C erhitzt und verbleibt 12 h bei dieser Temperatur. Das blassgelbe hochviskose Produkt **2** erhält man analytisch rein mit einer Ausbeute von 42,03 g (90,6 %).

### Beispiel 1.2 Umsetzung von Phenylglycidether mit DOPO

In einem 100 ml-Dreihalskolben werden 15,02 g (100 mmol) Phenylglycidether, 7,0 g (32,4 mmol) Dihydro-9-oxa-10-phenanthren-10-oxid (DOPO) und 0,115 g (0,7 mmol) Triethanolamin gegeben und unter Rühren auf eine Kolbeninnentemperatur von 140°C gebracht. Unmittelbar nach Erreichen der angegebenen Temperatur wurden erneut 7,0 g (32,4 mmol) DOPO dem Reaktionsgemisch zugegeben. Nach dem Aufschmelzen des zugebenen DOPO und erneuten Anstieg der Temperatur der Reaktionsgemisches (Exothermie der Additionsreaktion) wurde schließlich die letzte Zugabe von DOPO (7,62 g ; 35,2 mmol) durchgeführt, um einen vollständigen stöchiometrischen Umsatz des Phenylglycidethers zu erreichen. Anschließend wurde das Reaktionsgemische 30 h bei 145°C gehalten. Bei dem so entstandenen Alkohol **6** wurde mittels Titration (iodometrisch) ein Gehalt an freiem DOPO von 0,45 % ermittelt. Neben chromatographischen und IR-spektroskopischen Untersuchungen wurden zur Kontrolle des Reaktionsverlaufes ³¹P{¹H}-NMR-Messungen durchgeführt, welche durch einen deutlichen Tieffeldshift des Reaktionsgemisches auf 39,1 ppm im Vergleich zum reinen DOPO (16,5 ppm) zeigen und somit die Kopplungsreaktion belegen.

### Beispiel 1.3 Umsetzung von Diglycidether-Bisphenol-A (DGEBA) mit DOPO

In einem 500 ml-Dreihalskolben werden 80,07 g (235,2 mmol) Diglycidether-Bisphenol-A (DGEBA), 33,0 g (152,6 mmol) Dihydro-9-oxa-10-phenanthren-10-oxid (DOPO) und 0,452 g (3 mmol) Triethanolamin gegeben. Das Reaktionsgemisch wird unter Rühren auf 140°C erhitzt, wobei die Kopplungsreaktion nach 90 min einsetzt, was zu einer deutlichen Temperaturerhöhung (160°C) führt. Anschließend wird die zweite Charge DOPO (33,0 g ; 152,6 mmol) hinzugeben. Nach erneuten Anstieg und anschließendem Abfall der Temperatur erfolgt die Zugabe des für einen stöchiometrischen Umsatz notwendigen restlichen DOPO's (35,7 g ; 165,2 mmol).Abschließend wurde das Reaktionsgemisch noch **4** h bei 145°C erhitzt. Das erhaltene Produkt 7 in einer Ausbeute von 172,4 g (94,8 % der Theorie) wurde mittels HPLC analytisch untersucht und hatte eine Reinheit von 92,4 %. An dieser Stelle wurde auf eine weitere Aufreinigung verzichtet.

### Beispiele 1.4 bis 1.10

In analoger Weise lassen sich Cyclohexan-1,4-dimethanol-diglycidether (Polypox® R11; UPPC AG, Mietingen-Baltringen, Deutschland)*,* Glycerin-triglycidether (Polypox® R12; UPPC AG, Mietingen-Baltringen, Deutschland), Neopentylglykol-diglycidether (Polypox® R14 ; UPPC AG, Mietingen-Baltringen, Deutschland), Pentaerythrittetraglycidether (Polypox® R16 ; UPPC AG, Mietingen-Baltringen, Deutschland), Trimethylolpropan-Triglycidether (Polypox® R20 ; UPPC AG, Mietingen-Baltringen, Deutschland), 4,4'-Methylenbis(*N,N*-diglycidylanilin) und Glycidylmethacrylat mit DOPO umsetzen.

### Beispielgruppe 2

Umsetzung von Aldehyden und Ketonen mit Phosphinsäureestern

### Beispiel 2.1. Umsetzung von DOPO mit Paraformaldehyd

Diese Umsetzung erfolgte nach der Vorschrift aus J.-Y. Shieh, C.-S. Wang Polymer, 42, 2001, 7617-7625.

### Beispiel 2.2 Umsetzung von DOPO mit Aceton

In einem 50 ml-Dreihalskolben mit Thermometer, Stickstoffzuleitung und Rückflußkühler werden 10,81 g (50 mmol) Dihydro-9-oxa-10-phenanthren-10-oxid (DOPO), 2,90 g (50 mmol) Aceton (wasserfrei) und 0,1 g (0,9 mmol) Triethanolamin unter schwachem Stickstoffstrom und Rühren auf 140 °C erhitzt. Das Reaktionsgemisch wird 4 h bei dieser Temperatur gehalten. Das weiße, feste Produkt mit einer Ausbeute von 13 g (95 %) wurde IR-spektektroskopisch untersucht. Dabei wurde keine Carbonylbande des Acetons mehr beobachtet. Stattdessen trat bei 3305 cm⁻¹ eine Hydroxylbande des Hydroxylphosphinates auf, was auf eine vollständige Umsetzung des DOPOs hinweist.

### Beispielgruppe 3a

Umsetzung der Produkte der Beispielgruppe 1 mit (Meth)Acrylsäurechlorid

### Beispiel 3.1. Umsetzung von 1-{4-[2-Hydroxy-3-(10-oxo-10H-9-oxa-10λ⁵-phospha-phenanthren-10-yl)-propoxy]-butoxy}-3-(10-oxo-10H-9-oxa-10λ⁵-phosphaphenanthren-10-yl)-propan-2-ol (2) (1,4-Butandiol-diglycidether mit Dihydro-9-oxa-10-phenanthren-10-oxid) mit Methacrylsäurechlorid zu 9

In einem 500 ml Dreihalskolben mit Thermometer, Tropftrichter, Stickstoffzuleitung und Rückflusskühler wird **9** (31,49 g ; 50 mmol) in 85 ml Chloroform gelöst (ca. 20 %-ige Lösung). Nach der Zugabe von 20,74 g (205 mmol) Triethylamin, gelöst in 35 ml Chloroform, wird das Reaktionsgemisch auf -2 °C abgekühlt. Anschließend werden 21,91 g (200 mmol) Methacrylsäurechlorid, gelöst in 20 ml Chloroform, zugetropft, wobei die Temperatur des Reaktionsgemisches unter 0 °C gehalten wird. Das Reaktionsgemisch wird 4 h unter Kühlung weitergerührt und anschließend 16 h zur vollständigen Nachreaktion ohne Kühlung gebracht. Danach wird der Kolbeninhalt zweimal mit 500 ml Eiswasser ausgewaschen, die organische Phase abgetrennt und über Natriumsulfat getrocknet. Das Methacrylatprodukt **9** wurde in Chloroform aus Stabilisierungsgründen bis zur weiteren Verarbeitung belassen. Eine Analyse des Feststoffgehaltes ergab eine Umsetzung von 98 %. Mittels IR-spekroskopischer Untersuchung konnte eine vollständige Umsetzung durch ein Fernbleiben der Hydroxylbande und einem deutlichen Erscheinen einer Carbonylbande bei 1717 cm⁻¹ festgestellt werden. Weitere Reinheitskontrollen fanden durch chromatographische Methoden statt.

### Beispiel 3.2. Umsetzung von 1-(10-Oxo-10H-9-oxa-10λ⁵-phosphaphenanthren-10-yl)-3-phenoxypropan-2-ol (6) (Phenylglycidether mit Dihydro-9-oxa-10-phenanthren-10-oxid) mit Methacrylsäurechlorid zu 13

In einem 500 ml Dreihalskolben mit Thermometer, Tropftrichter, Stickstoffzuleitung und Rückflusskühler wird **6** (18,32 g ; 50 mmol) in 50 ml Chloroform gelöst (ca. 20 %-ige Lösung). Nach der Zugabe von 11,13 g (110 mmol) Triethylamin, gelöst in 10 ml Chloroform, wird das Reaktionsgemisch auf-5 °C abgekühlt. Anschließend werden 10,45 g (100 mmol) Methacrylsäurechlorid, gelöst in 10 ml Chloroform, zugetropft, wobei die Temperatur des Reaktionsgemisches unter 0 °C gehalten wird. Das Reaktionsgemisch wird 4 h unter Kühlung weitergerührt und anschließend 72 h zur vollständigen Nachreaktion ohne Kühlung weitergerührt. Anschließend wird der Kolbeninhalt zweimal mit jeweils 300 ml Eiswasser gewaschen schließlich durch Waschen mit verdünnter Saltsäure auf einen pH-Wert von 7 gebracht. Die organische Fraktion wird über Natriumsulfat getrocknet und die leichtflüchtigen Bestandteile werden am Rotationsverdampfer unter vermindertem Druck (20 mbar) entfernt. Bei dem auf diese Weise erhaltenen Methacrylatprodukt **13** handelt es sich um eine leicht bräunliche, klare und sehr viskose Flüssigkeit. Die Ausbeute betrug 23,07 g (98 % der Theorie). Mittels IR-spekroskopischer Untersuchung konnte eine vollständige Umsetzung durch ein Fernbleiben der Hydroxylbande und einem deutlichen Erscheinen einer Carbonylbande bei 1718 cm⁻¹ festgestellt werden. Weitere Reinheitskontrollen fanden durch chromatographische Methoden statt. Weiterhin wurden ¹H-, ¹³C{¹H}- und ³¹P{¹H}-NMR-spektroskopische Untersuchungen durchgeführt. Dabei wird im ³¹P{¹H}-NMR-Spektrum ein eine chemische Verschiebung von 34,3 ppm beobachtet, welche sich deutlich von der chemischen Verschiebung des entsprechenden Alkohols bei 39,1 ppm unterscheidet.

### Beispiel 3.3.: Umsetzung von 1-[4-(1-{4-[2-Hydroxy-3-(10-oxo-10H-9-oxa-10λ⁵-phosphaphenanthren-10-yl)-propoxy]-phenyl}-1-methyl-ethyl)-phenoxy]-3-(10-oxo-10H-9-oxa-10λ⁵-phosphaphenanthren-10-yl)-propan-2-ol (7) (Diglycidether von Bisphenol A mit Dihydro-9-oxa-10-phenanthren-10-oxid) mit Methacrylsäurechlorid zu 14

In einem 500 ml Dreihalskolben mit Thermometer, Tropftrichter, Stickstoffzuleitung und Rückflusskühler wird **7** (33,64 g ; 50 mmol) in 105 ml Chloroform gelöst (ca. 20 %-ige Lösung). Nach der Zugabe von 10,12 g (100 mmol) Triethylamin, gelöst in 15 ml Chloroform, wird das Reaktionsgemisch auf -2 °C abgekühlt. Anschließend werden 10,46 g (100 mmol) Methacrylsäurechlorid, gelöst in 20 ml Chloroform, zugetropft, wobei die Temperatur des Reaktionsgemisches unter 0 °C gehalten wird. Das Reaktionsgemisch wird 4 h unter Kühlung und anschließend 16 h zur vollständigen Nachreaktion ohne Kühlung weitergerührt. Danach wird der Kolbeninhalt auf 300 ml Eiswasser gegeben, zweimal mit 400 ml Eiswasser gewaschen (bis pH-Wert 7 erreicht ist), die organische Phase abgetrennt und über Natriumsulfat getrocknet. Das Methacrylatprodukt **14** wurde in Chloroform aus Stabilitätsgründen bis zur weiteren Verarbeitung belassen. Eine Analyse des Feststoffgehaltes ergab eine Umsetzung von 96 %. Mittels IR-spekroskopischer Untersuchung konnte eine vollständige Umsetzung durch ein Fernbleiben der Hydroxylbande und einem deutlichen Erscheinen einer Carbonylbande bei 1720 cm⁻¹ festgestellt werden. Weitere Reinheitskontrollen fanden durch chromatographische Methoden statt.

### Beispiel 3.4. Umsetzung von (10-Oxo-10H-9-oxa-10λ⁵-phosphaphenanthren-10-yl)-methanol (Darstellung aus Paraformaldehyd mit Dihydro-9-oxa-10-phenanthren-10-oxid) mit Methacrylsäurechlorid zu 2-Methacrylsäure-10-oxo-10H-9-oxa-10λ⁵-phosphaphenanthren-10-ylmethylester (16)

In einem 500 ml-Dreihalskolben mit Thermometer, Stickstoffzuleitung und Rückflusskühler wird (10-Oxo-10H-9-oxa-10λ⁵ -phosphaphenanthren-10-yl)-methanol (24,62 g ; 100 mmol) in 70 ml Chloroform suspendiert. Nach der Zugabe von 20,74 g (205 mmol) Triethylamin, gelöst in 35 ml Chloroform, wird das Reaktionsgemisch auf -2°C abgekühlt. Anschließend werden 20,91 g (200 mmol) Methacrylsäurechlorid, gelöst in 20 ml Chloroform, zugetropft, wobei die Temperatur des Reaktionsgemisches unter 0 °C gehalten wird. Das Reaktionsgemisch wird 3 h unter Kühlung und anschließend 16 h zur vollständigen Nachreaktion ohne Kühlung weitergerührt. Danach wird der Kolbeninhalt auf 500 ml Eiswasser gegeben, einmal mit 500 ml Wasser versetzt mit 2 ml konzentrierter Salzsäure und einmal mit 500 ml Wasser gewaschen (bis pH-Wert 7 erreicht ist), die organische Phase abgetrennt und über Natriumsulfat getrocknet. Das Methacrylatprodukt **16** wurde in Chloroform aus Stabilitätsgründen bis zur weiteren Verarbeitung belassen. Eine Analyse des Feststoffgehaltes ergab einen Gehalt an **16** von 34,20 g (75 %). Mittels IR-spekroskopischer Untersuchung konnte eine vollständige Umsetzung durch ein Fernbleiben der Hydroxylbande und einem deutlichen Erscheinen einer Carbonylbande bei 1719 cm⁻¹ festgestellt werden. Weitere Reinheitskontrollen fanden durch chromatographische Methoden statt.

### Beispielgruppe 3b

Umsetzung der Produkte der Beispielgruppe 1 mit
[3-(Triethoxysilyl)]-propylisocyanat

### Beispiel 3.4. Umsetzung von (10-Oxo-10H-9-oxa-10λ⁵-phosphaphenanthren-10-yl)-methanol (Synthese aus Paraformaldehyd und Dihydro-9-oxa-10-phenanthren-10-oxid) mit [3-(Triethoxysilyl)-propylisocyanat zu [3-(Triethoxysilyl)-propyl-carbamat-10-oxo-10H-9-oxa-10λ⁵-phosphaphenanthren-10-ylmethylester (17)

In einem 100 ml Rundkolben werden 3,00 g (12,2 mmol) (10-Oxo-10H-9-oxa-10λ⁵-phosphaphenanthren-10-yl)-methanol in 25 ml Pyridin gelöst. Anschließend erfolgt die Zugabe von 3,01 g (12,2 mmol) [3-(Triethoxysilyl)-propylisocyanat. Anschließend wird das Reaktionsgemisch 24 h bei 120°C gehalten und das Pyridin danach im Vakuum entfernt. Man erhält 5,2 g (87 %) des Siloxans **17**. IR-spektroskopische Untersuchungen ein vollständiges Verschwinden der Hydroxylbande des (10-Oxo-10H-9-oxa-10λ⁵-phosphaphenanthren-10-yl)-methanol (3234 cm⁻¹), sowie der Isocyanatbande des [3-(Triethoxysilyl)-propylisocyanat (2272 cm⁻¹). Dafür trat eine völlig neue Bande bei 1733 cm⁻¹ auf, welche der Carbonylschwingung einer Urethangruppe entspricht, was einen quantitativen Verlauf der Umsetzung belegt.

### Beispielgruppe 4

Massen und Polymere (Harze), erhalten durch Mischen und ggf. Polymerisieren der Produkte der Beispielgruppe 3 mit Comonomeren; Härtung durch Elektronenbestrahlung

### Beispiel 4.1. Reaktivharz R1: Ebecryl® 284, Triallylisocyanurat und Methacrylatsystem 11

Ebecryl® 284, Triallylisocyanurat (Gewichtsverhältnis 2:1) und Methacrylatsystem **11** werden in Chloroform gelöst, so dass eine gerade fließfähige homogene Lösung entsteht, welche einen Masseanteil an Phosphor von 2 % enthält. Diese wird in eine entsprechende Aluminiumgießform (50 mm x 50 mm x 10 mm) gegeben, und anschließend wird im Vakuumtrockenschrank das Lösungsmittel langsam entfernt. Das elektronenstrahlhärtbare Gemisch wird anschließend einer Energiedosis von 150 kGy ausgesetzt. Es kommt zur vollständigen Aushärtung des Reaktivharzsystems.

### Beispiel 4.2. Reaktivharz R2: Ebecryl® 600 und Methacrylatsystem 13

Ebecryl® 600 und Methacrylatsystem **13** werden in Chloroform gelöst, so dass eine gerade fließfähige homogene Lösung entsteht, welche einen Masseanteil an Phosphor von 2 % enthält. Diese wird in eine entsprechende Aluminiumgießform (50 mm x 50 mm x 10 mm) gegeben und anschließend wird im Vakuumtrockenschrank das Lösungsmittel langsam entfernt. Das elektronenstrahlhärtbare Gemisch wird anschließend einer Energiedosis von 150 kGy ausgesetzt. Es kommt zur vollständigen Aushärtung des Reaktivharzsystems.

### Beispiel 4.3. Reaktivharz R3: Ebecryl® 600 und Methacrylatsystem 10

Ebecryl® 600 und Methacrylatsystem **10** werden in Chloroform gelöst, so dass eine gerade fließfähige homogene Lösung entsteht, welche einen Masseanteil an Phosphor von 2 % enthält. Diese wird in eine entsprechende Aluminiumgießform (50 mm x 50 mm x 10 mm) gegeben und anschließend wird im Vakuumtrockenschrank das Lösungsmittel langsam entfernt. Das elektronenstrahlhärtbare Gemisch wird anschließend einer Energiedosis von 150 kGy ausgesetzt. Es kommt zur vollständigen Aushärtung des Reaktivharzsystems. Mittels Sol-Gel-Analyse wurde ein Gehalt des Polymers von 97,57 % bestimmt.

### Beispiel 4.4. Reaktivharz R4: Ebecryl® 600 und Methacrylatsystem 11

Ebecryl® 600 und Methacrylatsystem **11** werden in Chloroform gelöst, so dass eine gerade fließfähige homogene Lösung entsteht, welche einen Masseanteil an Phosphor von 2 % enthält. Diese wird in eine entsprechende Aluminiumgießform (50 mm x 50 mm x 10 mm) gegeben und anschließend wird im Vakuumtrockenschrank das Lösungsmittel langsam entfernt. Das elektronenstrahlhärtbare Gemisch wird anschließend einer Energiedosis von 150 kGy ausgesetzt. Es kommt zur vollständigen Aushärtung des Reaktivharzsystems. Mittels Sol-Gel-Analyse wurde ein Gelhalt des Polymers von 97,32 % bestimmt.

### Beispiel 4.5 Reaktivharz R5: Ebecryl® 610 und Methacrylatsystem 10

Ebecryl® 610 und Methacrylatsystem **10** werden in Chloroform gelöst, so dass eine gerade fließfähige homogene Lösung entsteht, welche einen Masseanteil an Phosphor von 2 % enthält. Diese wird in eine entsprechende Aluminiumgießform (50 mm x 50 mm x 10 mm) gegeben und anschließend wird im Vakuumtrockenschrank das Lösungsmittel langsam entfernt. Das elektronenstrahlhärtbare Gemisch wird anschließend einer Energiedosis von 100 kGy ausgesetzt. Es kommt zur vollständigen Aushärtung des Reaktivharzsystems.

### Beispiel 4.6. Reaktivharz R6: Ebecryl® 610 und Methacrylatsystem 11

Ebecryl® 610 und Methacrylatsystem **11** werden in Chloroform gelöst, so dass eine gerade fließfähige homogene Lösung entsteht, welche einen Masseanteil an Phosphor von 2 % enthält. Diese wird in eine entsprechende Aluminiumgießform (50 mm x 50 mm x 10 mm) gegeben und anschließend wird im Vakuumtrockenschrank das Lösungsmittel langsam entfernt. Das elektronenstrahlhärtbare Gemisch wird anschließend einer Energiedosis von 100 kGy ausgesetzt. Es kommt zur vollständigen Aushärtung des Reaktivharzsystems. Mittels Sol-Gel-Analyse wurde ein Gelhalt des Polymers von 98,72 % bestimmt.

### Beispiel 4.7. Reaktivharz R7: Ebecryl® 610 und Methacrylatsystem 9

Ebecryl® 610 und Methacrylatsystem **9** werden in Chloroform gelöst, so dass eine gerade fließfähige homogene Lösung entsteht, welche einen Masseanteil an Phosphor von 2 % enthält. Diese wird in eine entsprechende Aluminiumgießform (50 mm x 50 mm x 10 mm) gegeben und anschließend wird im Vakuumtrockenschrank das Lösungsmittel langsam entfernt. Das elektronenstrahlhärtbare Gemisch wird anschließend einer Energiedosis von 100 kGy ausgesetzt. Es kommt zur vollständigen Aushärtung des Reaktivharzsystems. Mittels Sol-Gel-Analyse wurde ein Gelhalt des Polymers von 98,67 % bestimmt.

**Tabelle I:**

| Glastemperatur, Bruchzähigkeit und Brandverhalten der beschriebenen Reaktivharzsysteme: | | | |
|---|---|---|---|
| **Reaktivharz** | **T_{g} [°C]** | **K_{1c} [MN/m^{3/2}]** | **UL 94 HB^{[1]}** |
| Ebecryl® 284 | 79,0 | 1,25 | - |
| **R1** | 84,8 | 0,44 | + |
| Ebecryl® 600 | 152,7 | 0,72 | - |
| **R2** | 73,5 | 0,63 | + |
| **R3** | 104,3 | 0,38 | + |
| **R4** | 102,7 | 0,60 | + |
| Ebecryl® 610^{[2]} | 155,7 | 0,44 | - |
| **R5**^{[2]} | 125,6 | 0,48 | + |
| **R6**^{[2]} | 137,0 | 0,48 | + |
| **R7**^{[2]} | 145,0 | 0,42 | + |

| | | | |
|---|---|---|---|
| Energiedosis 150 kGy T_{g} = Glastemperatur (DMA) K_{1c} = Bruchzähigkeit ^{[1]} Durchführung des Brandtestes in Anlehnung an UI 94 HB ^{[2]} Energiedosis 100 kGy | | | |

### Beispielgruppe 5

Massen und Polymere (Harze), erhalten durch Mischen und ggf. Polymerisieren der Produkte der Beispielgruppe 3 mit Comonomeren; Härtung mittels UV-Bestrahlung

### Beispiel 5.1. Methylmethacrylat und Methacrylatsystem 16

In einer Abdampfschale wurden Methylmethacrylat und das phosphorhaltige Methacrylat **16** unter Rühren zusammengegeben, so dass der Phosphoranteil 2 % betrug, und UV-Strahlung ausgesetzt. Zusätzlich wurde als Photoinitiator a,a-Dimethoxy-a-phenylacetophenon zugegeben. Kurz vor dem Gelieren des Reaktionsgemisches wurde das Rühren eingestellt, so dass ein homogen UVvernetztes Polymer entstand. Dieses wurde einem Flammtest in Anlehnung an UL 94 HB unterzogen, welchen das Polymer in Gegensatz zum ummodifizierten PMMA bestand. Mittels DSC wurde eine Glastemperatur T_{g} von 95,8°C ermittelt.

### Beispielgruppe 6

Massen und Polymere (Harze), erhalten durch Mischen und ggf. Polymerisieren der Produkte der Beispielgruppe 1 und 2 mit Comonomeren; thermische Härtung

### Beispiel 6.1

### Cyanatharz C1: Dicyanat von Bisphenol A (18) mit 1-(10-Oxo-10H-9-oxa-10λ⁵-phosphaphenanthren-10-yl)-3-phenoxypropan-2-ol (6)

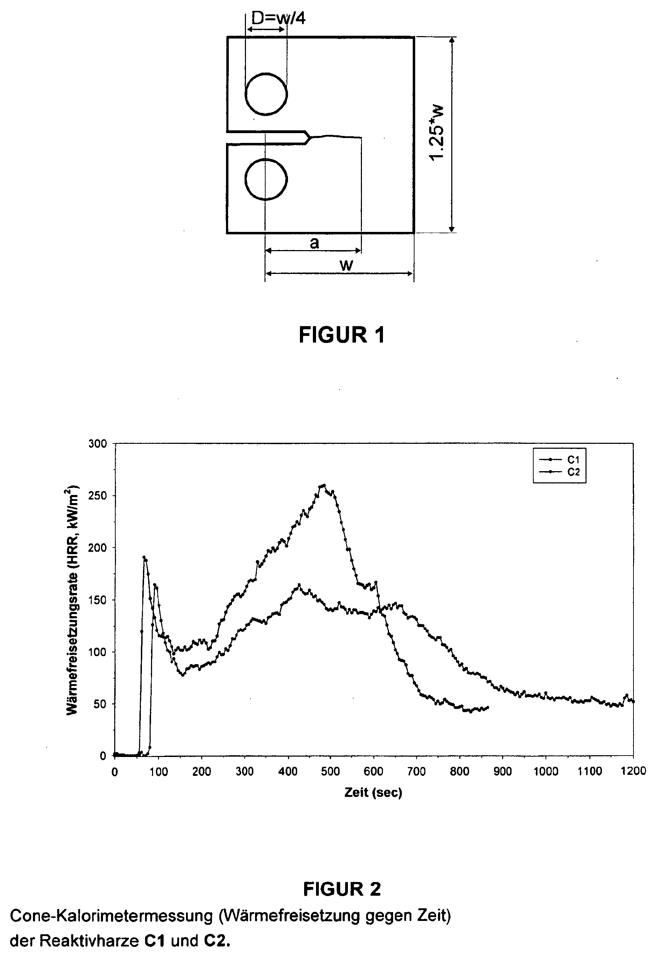

Nachdem die Zeit bis zum Erreichen des Gelpunktes (B-Zeit) einer Reaktionsmischung des Dicyanates **18** und des hydroxylgruppenhaltigen Phosphinats **6** mit einem Phosphoranteil von 2 % bei einer Temperatur von 180°C mit 29 min ermittelt wurde, wurden Platten mit einer Kantenlänge von 19 cm x 15 cm x 0,6 cm gegossen. Dazu wurde ein Reaktionsgemisch von 48 g des Phosphinates **6** mit 154,8 g des Dicyanates **18** bei 140°C geschmolzen, homogenisiert und entgast. Anschließend wurde es heiß in eines Edelstahlform mit oben beschriebenen Abmessungen gegossen. Die Härtung des Cyanatharzes erfolgte stufenweise. Zunächst wurde des Reaktionsgemisch 10 h bei 140°C belassen, danach erfolgte eine stufenweise Temperaturerhöhung bis auf 240°C, wobei in 20°C-Schritten jeweils 30 min Aufheizzeit gewährt wurden und anschließend 60 min bei der entsprechend erreichten Temperatur, diese konstant gehalten wurde. Abschließend wurde nochmals 30 min auf 250°C erwärmt und diese Temperatur eine weitere Stunde gehalten, bevor das Harz langsam abgekühlt wurde. Damit ergab sich eine Gesamtzeit der Härtung von 19 h. Das auf die Weise erhaltene Cyanatharz erreichte nach der ASTM-Prüfmethode (ASTM: American Society for Testing and Materials) UL 94 eine Klassifizierung V-0. Cone-Kalorimeter-Untersuchungen ergaben eine mittlere Wärmefreisetzungsrate HHRₜₒₜₐₗ von 152,0 kW/m², siehe **Figur 2**.

### Beispiel 6.2

### Cyanatharz C2: Dicyanat von Bisphenol A (18) mit (10-Oxo-10H-9-oxa-10λ⁵-phosphaphenanthren-10-yl)-methanol (Darstellung aus Paraformaldehyd mit Dihydro-9-oxa-10-phenanthren-10-oxid)

Nachdem die Zeit bis zum Erreichen des Gelpunktes (B-Zeit) einer Reaktionsmischung des Dicyanates **18** und (10-Oxo-10H-9-oxa-10λ⁵-phosphaphenanthren-10-yl)-methanol mit einem Phosphoranteil von 2 % bei einer Temperatur von 180°C mit 28 min ermittelt wurde, wurden Platten mit einer Kantenlänge von 19 cm x 15 cm x 0,6 cm gegossen. Dazu wurde ein Reaktionsgemisch von 48 g des (10-Oxo-10H-9-oxa-10λ⁵-phosphaphenanthren-10-yl)-methanol mit 154,8 g des Dicyanates **18** bei 140°C geschmolzen, homogenisiert und entgast. Anschließend wurde es heiß in eines Edelstahlform mit oben beschriebenen Abmessungen gegossen. Die Härtung des Cyanatharzes erfolgte stufenweise. Zunächst wurde des Reaktionsgemisch 10 h bei 140°C belassen, danach erfolgte eine stufenweise Temperaturerhöhung bis auf 240°C, wobei in 20°C-Schritten jeweils 30 min Aufheizzeit gewährt wurden und anschließend 60 min bei der entsprechend erreichten Temperatur, diese konstant gehalten wurde. Abschließend wurde nochmals 30 min auf 250°C erwärmt und diese Temperatur eine weitere Stunde gehalten, bevor das Harz langsam abgekühlt wurde. Damit ergab sich eine Gesamtzeit der Härtung von 19 h. Das auf die Weise erhaltene Cyanatharz erreichte nach der ASTM-Prüfmethode (ASTM: American Society for Testing and Materials) UL 94 eine Klassifizierung V-0. Cone-Kalorimeter-Untersuchungen ergaben eine mittelere Wärmefreisetzungsrate HHRₜₒₜₐₗ von 92,8 kW/m², siehe **Figur 2****.** Der Wert liegt damit deutlich unter dem Wert des Harzes **C1**, was auf einen geringeren Organikanteil im Harz **C2**, aufgrund kleineren Phosphinatsystems zurückzuführen ist.

| **Reaktivharz** | **T_{g} [°C]** | **K_{1c} [MN/m^{3/2}]** | **UL 94** |
|---|---|---|---|
| C1 | 183,4 | - | V-0 |
| C2 | 228,2 | 0,72 | V-0 |

| | | | |
|---|---|---|---|
| T_{g} = Glastemperatur K_{1c} = Bruchzähigkeit Probenpräparation: | | | |

Bestrahlungsapparaturen: Elektronenstrahlhärtung: Elektronenbeschleuniger Elektronika U-003 ; UV-Härtung: Hönle Uvahand 250

### Charakterisierung Probenkörper:

DMA (Dynamisch-Mechanische Analyse): Die Glastemperatur wurde mit Hilfe der Dynamisch-Mechanischen Analyse bestimmt. Dazu wurde die Probe mit einer Heizrate von 4 K/min erwärmt und gleichzeitig einer Schwingung (f = 1 Hz ; Amplitude 1,56 mrad) ausgesetzt. Geräteintern wurden Speicher- und Verlustmodul und der sich daraus ergebende tan δ ermittelt. Die Glastemperatur Tg ergibt sich bei dieser Messmethode aus dem Maximum der tan δ-Kurve.

Bruchzähigkeitsbestimmung: Die Bruchzähigkeit K1c der Proben wurde auf Basis von Bruchmechanikversuchen nach dem OCT-Verfahren (Optical Crack Tracing) durchgeführt. Das Meßprinzip dieses Verfahrens beruht auf der optischen Bestimmung der Länge eines Risses und dessen Verlauf durch den Probekörper (siehe **Figur 1**; die Figur zeigt einen Probekörper für optische Rißverfolgung (w = 35 mm, Dicke 6,0 mm)).

Die Rißverfolgung erfolgt mittels CCD-Kamera und wird computergestützt ausgewertet. Die Herstellung der Probekörper erfolgt durch CNC-Fräsen.

Sol-Gel-Analyse: Zur Ermittlung der durch die Bestrahlung entstandenen Vernetzung wurden Sol-Gel-Analysen wie folgt durchgeführt. Nachdem die Probe 48 h Dichlormethan ausgesetzt wurde (10 Vol-% Probenmenge) wurde über eine Fritte (P3) der vernetzte Anteil (Gel) von un- bzw. niedervernetztem Anteil (Sol) abgetrennt. Durch Trocknen und anschließendes Auswiegen des Gels konnte der hochvernetzte Anteil bestimmt werden.

Cone-Kalorimeter: Messungen wurden durchgeführt an einem Cone-Kalorimeter der Fa. Fire Testing Technologies, East Grinstead, Großbritannien. Die mittlere Wärmefreisetzungsrate HRRtotal gibt an, welche Wärme von der Zeit der Entzündung bis zur Zeit des Erlöschens der Probe freigesetzt wird. Probenmaße: 100 mm x 100 mm x 6,6 mm.

Brandverhalten in Anlehnung an UL 94 HB: Mittels CNC-Fräse wurden Probekörper mit Kantenlängen von 45 mm x 5 mm x 3 mm hergestellt. Anschließend wurden diese 10 s horizontal den Flammkegel einer Bunsenbrennerflamme gehalten. Brannte die Probe beim zweitem Durchlauf nach Entfernen der Flamme nicht weiter, galt sie als flammfest in Anlehnung an den Test UL 94 HB.

## Patentansprüche

1. Verwendung eines Phosphinates der Formel (I),
[(R¹O)(R²)P(O)-(CHR₃)ₘ-CR⁵(OH)]ₙR⁴ (I)
worin:
R¹ und R² unabhängig voneinander eine gegebenenfalls substituierte Alkyl-, Aryl-, Arylalkyl-, Alkylaryl oder Alkylarylalkylgruppe mit vorzugsweise 1 bis 20 Kohlenstoffatomen darstellen,
R³ und R⁵ jeweils unabhängig voneinander Wasserstoff oder eine gegebenenfalls substituierte Alkyl-, Aryl-, Arylalkyl-, Alkylaryl oder Alkylarylalkylgruppe mit vorzugsweise 1 bis 20 Kohlenstoffatomen sind,
R⁴ Wasserstoff oder ein organischer Rest mit mindestens einem Kohlenstoffatom darstellt, der n-fach mit dem phosphorhaltigen Rest substituiert ist und ggf. weitere Substituenten trägt, wobei im Rest R⁴ dann, wenn er mehr als ein Kohlenstoffatom enthält, benachbarte Kohlenstoffatome einer Kohlenstoffkette durch Sauerstoffatome, Schwefelatome oder Aminogruppen unterbrochen sein können,
m gleich 0 oder 1 ist und
n eine ganze Zahl von 1 bis 6 darstellt, wobei
dann, wenn n mehr als 1 ist, R⁴ nicht Wasserstoff sein darf,
zur Herstellung von polymerisierbaren Phosphinaten der Formel (V):
[(R¹O)(R²)P(O)-(CHR³)ₘ-CR⁵(OR*)]ₙR⁴ (V),
worin:
OR* ein eine Estergruppe oder eine Urethangruppe enthaltender und über diese Gruppe an den Rest des Moleküls gekoppelter, in ein organisches Polymer einbindbarer Rest ist und die übrigen Reste und Indices wie für Formel (I) definiert sind,
oder als Bestandteil eines Polymeren, wobei die Einbindung der Verbindung mit der Formel (I) in dieses Polymer durch Verestern der freien Hydroxygruppe(n) oder durch Umsetzung dieser Gruppe(n) zu einer oder mehreren Urethangruppe(n) erfolgt.

2. Verwendung nach Anspruch 1, worin das Phosphinat der Formel (V) die folgende Formel (VII):
[(R¹O)(R²)P(O)-(CHR³)ₘ-CR⁵{-O(O)C-R**}]ₙR⁴ (VII)
oder die Formel (X)
I(R¹O)(R²)P(O)-(CHR³)ₘ-CR⁵{-O(O)C-NH-R**}]ₙR⁴ (X)
besitzt,
worin:
R** der oben als Bestandteil von R* genannte, organisch einbindbare Rest ist und die übrigen Reste und Indices die für Formel (V) angegebene Bedeutung besitzen.

3. Verwendung nach Anspruch 2, worin das Phosphinat der Formel (V) die folgende Formel (VI)
[(R¹O)(R²)P(O)-(CHR³)ₘ-CH{O(O)C-CR⁶=CH₂}]ₙR⁴ (VI)
oder die Formel (XI)
[(R¹O)(R²)P(O)-(CHR³)ₘ-CH{-O(O)C-NH-R⁷-Si(R⁸)₃}]ₙR⁴ (XI)
besitzt,
worin:
R⁶ Wasserstoff oder Methyl ist, R⁷ für eine ggf. substituierte Alkylen- oder Arylengruppe mit vorzugsweise 1 bis 20 Kohlenstoffatomen steht, worin die Kohlenstoffkette ggf. durch ein Stickstoff-, Sauerstoff- oder Schwefelatom unterbrochen sein kann, R⁸ gleich oder verschieden sein kann und ggf. substituiertes Alkyl, Aryl, Arylalkyl, Alkylaryl, Alkoxy, Aryloxy oder Arylalkoxy mit vorzugsweise 1 bis 10 Kohlenstoffatomen für arylfreie Gruppen und vorzugsweise 6 bis 18 Kohlenstoffatomen für arylhaltige Gruppen ist und die übrigen Reste und Indices die für Formel (V) angegebene Bedeutung besitzen,
und
die übrigen Reste und Indices die für Formel (V) in Anspruch 1 angegebene Bedeutung besitzen.

4. Verwendung nach einem der voranstehenden Ansprüche, worin im Phosphinat der Formel (V) m null ist.

5. Verwendung nach einem der voranstehenden Ansprüche, worin im Phosphinat der Formel (V) m 1 ist und R³ Wasserstoff ist.

6. Verwendung nach einem der voranstehenden Ansprüche, worin im Phosphinat der Formel (V) R¹ Phenyl ist und R² ein Alkoxid, vorzugsweise Methoxid oder Ethoxid ist.

7. Verwendung nach einem der voranstehenden Ansprüche, worin im Phosphinat der Formel (V) (R¹O)(R²)P(O) 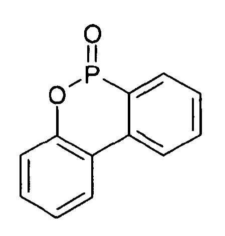 ist.

8. Verwendung nach einem der voranstehenden Ansprüche, wobei die Phosphinate der Formel (I) und/oder die Phosphinate der Formel (V) zur Herstellung flammfester und bruchzäher Polymerharze eingesetzt werden.

9. Verwendung nach Anspruch einem der voranstehenden Ansprüche, worin die Harze ausgewählt sind unter (Meth)Acrylaten, Polyestern, Polyamiden, Polyurethanen und Siliconharzen.

10. Phosphinat der Formel (V)
[(R¹O)(R²)P(O)-(CHR³)ₘ-CR⁵(OR*)]ₙR⁴ (V)
worin:
R¹ und R² unabhängig voneinander eine gegebenenfalls substituierte Alkyl-, Aryl-, Arylalkyl-, Alkylaryl oder Alkylarylalkylgruppe mit vorzugsweise 1 bis 20 Kohlenstoffatomen darstellen,
R³ und R⁵ jeweils unabhängig voneinander Wasserstoff oder eine gegebenenfalls substituierte Alkyl-, Aryl-, Arylalkyl-, Alkylaryl oder Alkylarylalkylgruppe mit vorzugsweise 1 bis 20 Kohlenstoffatomen ist,
R⁴ Wasserstoff oder ein organischer Rest mit mindestens einem Kohlenstoffatom darstellt, der n-fach mit dem phosphorhaltigen Rest substituiert ist und ggf. weitere Substituenten trägt, wobei im Rest R⁴ dann, wenn er mehr als ein Kohlenstoffatom enthält, benachbarte Kohlenstoffatome einer Kohlenstoffkette durch Sauerstoffatome, Schwefelatome oder Aminogruppen unterbrochen sein können,
OR* ein eine Estergruppe oder eine Urethangruppe enthaltender und über diese Gruppe an den Rest des Moleküls gekoppelter, in ein organisches Polymer einbindbarer Rest ist,
m gleich 0 oder 1 ist und
n eine ganze Zahl von 1 bis 6 darstellt, wobei
dann, wenn n mehr als 1 ist, R⁴ nicht Wasserstoff sein darf.

11. Phosphinat nach Anspruch 10 mit der Formel (VII):
[(R¹O)(R²)P(O)-(CHR³)ₘ-CR⁵{-O(O)C-R**}]ₙR⁴ (VII)
oder der Formel (X)
[(R¹O)(R²)P(O)-(CHR³)ₘ-CR⁵{-O(O)C-NH-R**}]ₙR⁴ (X)
worin R** der oben als Bestandteil von R* genannte, organisch einbindbare Rest ist und die übrigen Reste und Indices die für Formel (V) angegebene Bedeutung besitzen.

12. Phosphinat nach Anspruch 11 mit der Formel (VI)
[(R¹O)(R²)P(O)-(CHR³)ₘ-CH{O(O)C-CR⁶=CH₂}]ₙR⁴ (VI)
oder mit der Formel (IX)
[(R¹O)(R²)P(O)-(CHR³)ₘ-CH{-O-R⁷-NH₂}]ₙR⁴ (IX)
oder mit der Formel (XI)
[(R¹O)(R²)P(O)-(CHR³)ₘ-CH{-O(O)C-NH-R⁷-Si(R⁸)₃}]ₙR⁴ (XI)
worin
R⁶ Wasserstoff oder Methyl ist, R⁷ für eine ggf. substituierte Alkylen- oder Arylengruppe mit vorzugsweise 1 bis 20 Kohlenstoffatomen steht, worin die Kohlenstoffkette ggf. durch ein Stickstoff-, Sauerstoff- oder Schwefelatom unterbrochen sein kann, R⁸ gleich oder verschieden sein kann und ggf. substituiertes Alkyl, Aryl, Arylalkyl, Alkylaryl, Alkoxy, Aryloxy oder Arylalkoxy mit vorzugsweise 1 bis 10 Kohlenstoffatomen für arylfreie Gruppen und vorzugsweise 6 bis 18 Kohlenstoffatomen für arylhaltige Gruppen ist und die übrigen Reste und Indices die für Formel (V) angegebene Bedeutung
und
die übrigen Reste und Indices die für Formel (V) angegebene Bedeutung besitzen.

13. Phosphinat nach einem der Ansprüche 10 bis 12, worin m null ist.

14. Phosphinat nach einem der Ansprüche 10 bis 13, worin m 1 ist und R³ Wasserstoff ist.

15. Phosphinat nach einem der Ansprüche 10 bis 14, worin R¹ Phenyl ist und R² ein Alkoxid, vorzugsweise Methoxid oder Ethoxid ist.

16. Phosphinat nach einem der Ansprüche 10 bis 14, worin (R¹O)(R²)P(O) 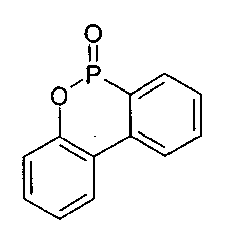 ist.

17. Verwendung eines Phosphinates der Formel (V) wie in einem der Ansprüche 10 bis 16 definiert als Bestandteil eines Polymeren, wobei die Einbindung der Verbindung mit der Formel (V) in dieses Polymer über die organisch einbindbare Gruppe OR* erfolgt.

18. Copolymerisat, erhalten durch Copolymerisation eines Phosphinates der Formel der Formel (I),
[(R¹O)(R²)P(O)-(CHR³)ₘ-CR⁵(OH)]ₙR⁴ (I)
worin:
R¹ und R² unabhängig voneinander eine gegebenenfalls substituierte Alkyl-, Aryl-, Arylalkyl-, Alkylaryl oder Alkylarylalkylgruppe mit vorzugsweise 1 bis 20 Kohlenstoffatomen darstellen,
R³ und R⁵ jeweils unabhängig voneinander Wasserstoff oder eine gegebenenfalls substituierte Alkyl-, Aryl-, Arylalkyl-, Alkylaryl oder Alkylarylalkylgruppe mit vorzugsweise 1 bis 20 Kohlenstoffatomen ist,
R⁴ Wasserstoff oder ein organischer Rest mit mindestens einem Kohlenstoffatom darstellt, der n-fach mit dem phosphorhaltigen Rest substituiert ist und ggf. weitere Substituenten trägt, wobei im Rest R⁴ dann, wenn er mehr als ein Kohlenstoffatom enthält, benachbarte Kohlenstoffatome einer Kohlenstoffkette durch Sauerstoffatome, Schwefelatome oder Aminogruppen unterbrochen sein können,
m gleich 0 oder 1 ist und
n eine ganze Zahl von 1 bis 6 darstellt, wobei
dann, wenn n mehr als 1 ist, R⁴ nicht Wasserstoff sein darf,
über eine Veresterung der freien Hydroxygruppe(n) oder durch Umsetzung dieser Gruppe(n) zu einer oder mehreren Urethangruppe(n)
und/oder eines Phosphinates der Formel (V):
[(R¹O)(R²)P(O)-(CHR³)ₘ-CR⁵(OR*)]ₙR⁴ (V),
worin:
OR* ein eine Estergruppe oder eine Urethangruppe enthaltender und über diese Gruppe an den Rest des Moleküls gekoppelter, in ein organisches Polymer einbindbarer Rest ist und die übrigen Reste und Indices wie für Formel (I) definiert sind,
mit einem oder mehreren weiteren Monomeren, Oligomeren oder Polymeren.

19. Cyanatharz, Polyurethan oder Polyester, erhalten unter Verwendung mindestens eines Phosphinates der Formel (I) wie in Anspruch 1 definiert.

20. Cyanatharz, Polyurethan oder Polyester nach Anspruch 19, wobei in Formel (I) n mehr als 1 ist.

21. Additions- oder Kondensationspolymerisat, erhalten unter Verwendung mindestens eines Phosphinates der Formel (V) wie in Anspruch 10 oder einem davon abhängigen Anspruch definiert.

22. Additions- oder Kondensationpolymerisat nach Anspruch 21, wobei in Formel (V) n mehr als 1 ist.

23. Poly(meth)acrylat nach Anspruch 21 oder 22, erhalten unter Verwendung mindestens eines Phosphinates der Formel (VI) wie in Anspruch 12 definiert.

24. Kieselsäureheteropolykondensat nach Anspruch 21 oder 22, erhalten unter Verwendung eines Phosphinates der Formel (XI) wie in Anspruch 12 definiert.

25. Verfahren zum Herstellen einer Verbindung der Formel (VII)
I(R¹O)(R²)P(O)-(CHR³)ₘ-CR⁵{-O(O)C-R**}]ₙR⁴ (VII)
wie in Anspruch 11 definiert, worin ein Phosphinat der Formel (I) wie in Anspruch 1 definiert unter Veresterungsbedingungen mit einer Carbonsäure mit der Formel R**-C(O)OH oder einer aktivierten Form dieser Säure umgesetzt wird.

26. Verfahren zum Herstellen einer Verbindung der Formel (X)
[(R¹O)(R²)P(O)-(CHR³)ₘ-CR⁵{-O(O)C-NH-R**}]ₙR⁴ (X)
wie in Anspruch 11 definiert, worin ein Phosphinat der Formel (I) wie in Anspruch 1 definiert mit einem Isocyanat der Formel R**-NCO zur Reaktion gebracht wird.

## Claims

1. Use of a phosphinate of formula (I),
[(R¹O)(R²)P(O)-(CHR³)ₘ-CR⁵(OH)]ₙR⁴ (I)
wherein:
R¹ and R² independently of each other are an optionally substituted alkyl, aryl, arylalkyl, alkylaryl or alkylarylalkyl group preferably comprising 1 to 20 carbon atoms,
R³ and R⁵ independently of each other are hydrogen or an optionally substituted alkyl, aryl, arylalkyl, alkylaryl or alkylarylalkyl group preferably comprising 1 to 20 carbon atoms,
R⁴ is hydrogen or an organic radical comprising at least one carbon atom which is n-fold substituted with the phosphor containing radical and optionally carries additional substituents, wherein in the radical R⁴ in case it comprises more than one carbon atom, adjacent carbon atoms of a carbon chain can be interrupted by oxygen atoms, sulfur atoms, or amino groups,
m is 0 or 1 and
n is an integer of from 1 to 6, wherein
in case n is greater than 1, R⁴ must not be hydrogen,
for the preparation of polymerizable phosphinates of formula (V):
[(R¹O)(R²)P(O)-(CHR³)ₘ-CR⁵(OR*)]ₙR⁴ (V),
wherein:
OR* is a radical which contains an ester group oder an urethane group and is coupled to the remaining of the molecule and can be integrated into an organic polymer via this group, and the remaining radicals and indices are defined as for formula (I),
or as a component of a polymer, wherein the integration of the compound having formula (I) into this polymer takes place via esterification of the free hydroxy group(s) or via reaction of this/these group(s) to one or more urethane groups.

2. Use according to claim 1, wherein the phosphinate of formula (V) is of the following formula (VII):
[(R¹O)(R²)P(O)-(CHR³)ₘ-CR⁵{-O(O)C-R**}]ₙR⁴ (VII)
or formula (X)
[(R¹O)(R²)P(O)-(CHR³)ₘ-CR⁵{-O(O)C-NH-R**}]ₙR⁴ (X)
wherein:
R** is the radical mentioned above as component of R* which can be organically integrated and the remaining radicals and indices have the meaning as indicated for formula (V).

3. Use according to claim 2, wherein the phosphinate of formula (V) is of the following formula (VI)
[(R¹O)(R²)P(O)-(CHR³)ₘ-CH{O(O)C-CR⁶=CH₂}]ₙR⁴ (VI)
or formula (XI)
[(R¹O)(R²)P(O)-(CHR³)ₘ-CH{-O(O)C-NH-R⁷-Si(R⁸)₃}]ₙR⁴ (XI)
wherein:
R⁶ is hydrogen or methyl, R⁷ stands for an optionally substituted alkylene or arylene group preferably having 1 to 20 carbon atoms, wherein the chain of carbon atoms is optionally interrupted by a nitrogen, oxygen or sulfur atom, R⁸ can be equal or different and is optionally substituted alkyl, aryl, arylalkyl, alkylaryl, alkoxy, aryloxy oder arylalkoxy preferably having 1 to 10 carbon atoms in case of aryl-free groups and preferably having 6 to 18 carbon atoms for aryl containing groups and the remaining radicals and indices have the meaning as indicated for formula (V),
and
the remaining radicals and indices have the meaning as indicated for formula (V).

4. Use according to any of the preceding claims, wherein in the phosphinate of formula (V), m is zero.

5. Use according to any of the preceding claims, wherein in the phosphinate of formula (V), m is 1 and R³ is hydrogen.

6. Use according to any of the preceding claims, wherein in the phosphinate of formula (V), R¹ is phenyl and R² is an alkoxide, preferably methoxide or ethoxide.

7. Use according to any of the preceding claims, wherein in the phosphinate of formula (V), (R¹O)(R²)P(O) is

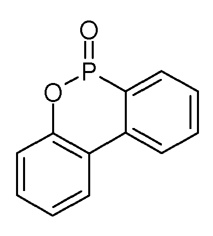

8. Use according to any of the preceding claims, wherein the phosphinates of formula (I) and/or the phosphinates of formula (V) are used for the preparation of polymer resins which are flameproof and have fracture toughness.

9. Use according to any of the preceding claims, wherein the resins are selected under (meth)acrylates, polyesters, polyamides, polyurethanes and silicone resins.

10. Phosphinate of formula (V)
[(R¹O)(R²)P(O)-(CHR³)ₘ-CR⁵(OR*)]ₙR⁴ (V)
wherein:
R¹ and R² independently of each other are an optionally substituted alkyl, aryl, arylalkyl, alkylaryl or alkylarylalkyl group preferably comprising 1 to 20 carbon atoms,
R³ and R⁵ independently of each other are hydrogen or an optionally substituted alkyl, aryl, arylalkyl, alkylaryl or alkylarylalkyl group preferably comprising 1 to 20 carbon atoms,
R⁴ is hydrogen or an organic radical comprising at least one carbon atom which is n-fold substituted with the phosphor containing radical and optionally carries additional substituents, wherein in the radical R⁴ in case it comprises more than one carbon atom, adjacent carbon atoms of a carbon chain can be interrupted by oxygen atoms, sulfur atoms, or amino groups,
OR* is a radical which contains an ester group oder an urethane group and is coupled to the remaining of the molecule and can be integrated into an organic polymer via this group,
m is 0 or 1 ist and
n is an integer of from 1 to 6, wherein
in case n is greater than 1, R⁴ must not be hydrogen,

11. Phosphinate according to claim 10 having the formula (VII):
[(R¹O)(R²)P(O)-(CHR³)ₘ-CR⁵{-O(O)C-R**}]ₙR⁴ (VII)
or the formula (X)
[(R¹O)(R²)P(O)-(CHR³)ₘ-CR⁵{-O(O)C-NH-R**}]ₙR⁴ (X)
wherein R** is the radical mentioned above as component of R* which can be organically integrated and the remaining radicals and indices have the meaning as indicated for formula (V).

12. Phosphinate according to claim 11 having the formula (VI)
[(R¹O)(R²)P(O)-(CHR³)ₘ-CH{O(O)C-CR⁶=CH₂}]ₙR⁴ (VI)
or the formula (IX)
[(R¹O)(R²)P(O)-(CHR³)ₘ-CH{-O-R⁷-NH₂}]ₙR⁴ (IX)
or the formula (XI)
[(R¹O)(R²)P(O)-(CHR³)ₘ-CH{-O(O)C-NH-R⁷-Si(R⁸)₃}]ₙR⁴ (XI)
wherein
R⁶ is hydrogen or methyl, R⁷ stands for an optionally substituted alkylene or arylene group preferably having 1 to 20 carbon atoms, wherein the chain of carbon atoms is optionally interrupted by a nitrogen, oxygen or sulfur atom, R⁸ can be equal or different and is optionally substituted alkyl, aryl, arylalkyl, alkylaryl, alkoxy, aryloxy oder arylalkoxy preferably having 1 to 10 carbon atoms in case of aryl-free groups and preferably having 6 to 18 carbon atoms for aryl containing groups and the remaining radicals and indices have the meaning as indicated for formula (V),
and
the remaining radicals and indices have the meaning as indicated for formula (V).

13. Phosphinate according to any of claims 10 to 12, wherein m is zero.

14. Phosphinate according to any of claims 10 to 13, wherein m is 1 and R³ is hydrogen.

15. Phosphinate according to any of claims 10 to 14, wherein R¹ is phenyl and R² is an alkoxide, preferably methoxide or ethoxide.

16. Phosphinat according to any of claims 10 to 14, wherein (R¹O)(R²)P(O) is

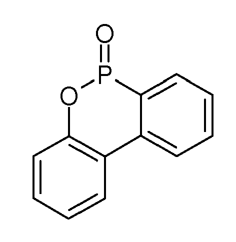

17. Use of a phosphinate of formula (V) as defined in any of claims 10 to 16 as a component of a polymer, wherein the integration of the compound of formula (V) into this polymer is made via the group OR* which can be organically integrated.

18. Copolymerisate, obtained by copolymerisation of a phosphinate of formula (I),
[(R¹O)(R²)P(O)-(CHR³)ₘ-CR⁵(OH)]ₙR⁴ (I)
wherein:
R¹ and R² independently of each other are an optionally substituted alkyl, aryl, arylalkyl, alkylaryl or alkylarylalkyl group preferably comprising 1 to 20 carbon atoms,
R³ and R⁵ independently of each other are hydrogen or an optionally substituted alkyl, aryl, arylalkyl, alkylaryl or alkylarylalkyl group preferably comprising 1 to 20 carbon atoms,
R⁴ is hydrogen or an organic radical comprising at least one carbon atom which is n-fold substituted with the phosphor containing radical and optionally carries additional substituents, wherein in the radical R⁴ in case it comprises more than one carbon atom, adjacent carbon atoms of a carbon chain can be interrupted by oxygen atoms, sulfur atoms, or amino groups,
m is 0 or 1 and
n is an integer of from 1 to 6, wherein
in case n is greater than 1, R⁴ must not be hydrogen,
via esterification of the free hydroxy group(s) or via reaction of this/these group(s) to one or more urethan groups,
and/or of a phosphinate of formula (V):
[(R¹O)(R²)P(O)-(CHR³)ₘ-CR⁵(OR*)]ₙR⁴ (V),
wherein:
OR* is a radical which contains an ester group oder an urethane group and is coupled to the remaining of the molecule and can be integrated into an organic polymer via this group, and the remaining radicals and indices are defined as in formula (I),
with one or more additional monomer(s), oligomer(s) or polymer(s).

19. Cyanate resin, polyurethane oder polyester, obtained using at least one phosphinate of formula (I) as defined in claim 1.

20. Cyanate resin, polyurethane oder polyester according to claim 19, wherein in formula (I), n is greater than 1.

21. Addition polymerisate or condensation polymerisate, obtained under use of at least one phosphinate of formula (V) as defined in claim 10 or a claim dependent thereon.

22. Addition polymerizate or condensation polymerizate according to claim 21, wherein in formula (V), n is greater than 1.

23. Poly(meth)acrylate according to claim 21 or 22, obtained by use of at least one phosphinate of formula (VI) as defined in claim 12.

24. Silicic acid heteropolycondensate according to claim 21 or 22, obtained by use of at least one phosphinate of formula (XI) as defined in claim 12.

25. Process for the production of a compound of formula (VII)
[(R¹O)(R²)P(O)-(CHR³)ₘ-CR⁵{-O(O)C-R**}]ₙR⁴ (VII)
as defined in claim 11, wherein a phosphinate of formula (I) as defined in claim 1 is reacted with a carboxylic acid having the formula R**-C(O)OH or with an activated form of this acid under esterification conditions.

26. Process for the production of a compound of formula (X)
[(R¹O)(R²)P(O)-(CHR³)ₘ-CR⁵{-O(O)C-NH-R**}]ₙR⁴ (X)
as defined in claim 11, wherein a phosphinate of formula (I) as claimed in claim 1 is reacted with an isocyanate of the formula R**-NCO.

## Revendications

1. Utilisation d'un phosphinate de la formule (I),
[(R¹O)(R²)P(O)-(CHR³)ₘ-CR⁵(OH)]ₙR⁴ (I)
dans laquelle:
R¹ et R² représentent de façon indépendante l'un de l'autre un groupe alkyle, aryle, arylalkyle, alkylaryle ou alkylarylalkyle éventuellement substitué, avec de préférence 1 à 20 atomes de carbone,
R³ et R⁵ sont de façon respectivement indépendante l'un de l'autre un hydrogène ou un groupe alkyle, aryle, arylalkyle, alkylaryle ou alkylarylalkyle éventuellement substitué, avec de préférence 1 à 20 atomes de carbone,
R⁴ représente un hydrogène ou un radical organique avec au moins un atome de carbone, qui est substitué n fois avec le radical contenant du phosphore et qui porte éventuellement d'autres substituants, dans lequel dans R⁴, lorsque ledit radical contient plus qu'un atome de carbone, des atomes de carbone voisins dans une chaîne de carbone peuvent être interrompus par des atomes d'oxygène,
des atomes de soufre ou des groupes aminés,
m est égal à 0 ou 1, et
n représente un nombre entier de 1 à 6,
dans lequel, lorsque n est supérieur à 1, R⁴ ne peut pas être un hydrogène,
pour la production de phosphinates polymérisables de la formule (V)
[(R¹O)(R²)P(O)-(CHR³)ₘ-CR⁵(OR*)]ₙR⁴ (V),
dans laquelle:
OR* est un radical contenant un groupe ester ou un groupe uréthane et couplé par ce groupe au reste de la molécule, et apte à être incorporé dans un polymère organique, et les autres radicaux et indices sont définis comme pour la formule (I),
ou comme constituant d'un polymère, l'incorporation du composé de la formule (I) dans ce polymère étant effectuée par estérification du/des groupe(s) hydroxyle libre(s) ou par conversion de ce/ces groupe(s) en un ou plusieurs groupe(s) uréthane.

2. Utilisation selon la revendication 1, dans laquelle le phosphinate de la formule (V) possède la formule suivante (VII):
[(R¹O)(R²)P(O)-(CHR³)ₘ-CR⁵{-O(O)C-R**}]ₙR⁴ (VII)
ou la formule (X):
[(R¹O)(R²)P(O)-(CHR³)ₘ-CR⁵{-O(O)C-NH-R**}]ₙR⁴ (X)
dans lesquelles
R** est le radical mentionné plus haut comme constituant de R* et apte à être incorporé organiquement et les autres radicaux et indices possèdent la signification indiquée pour la formule (V).

3. Utilisation selon la revendication 2, dans laquelle le phosphinate de la formule (V) possède la formule suivante (VI)
[(R¹O)(R²)P(O)-(CHR³)ₘ-CH{O(O)C-CR⁶=CH₂}]ₙR⁴ (VI)
ou la formule (XI):
[(R¹O)(R²)P(O)-(CHR³)ₘ-CH{-O(O)C-NH-R⁷-Si(R⁸)₃}]ₙR⁴ (XI)
dans lesquelles:
R⁶ est un hydrogène ou un méthyle,
R⁷ désigne un groupe alkylène ou arylène éventuellement substitué, avec de préférence 1 à 20 atomes de carbone, dans lesquels la chaîne de carbone peut éventuellement être interrompue par un atome d'azote, d'oxygène ou de soufre,
R⁸ peut être identique ou différent et est un groupe alkyle, aryle, arylalkyle, alkylaryle, alcoxy, aryloxy ou arylalcoxy éventuellement substitué, avec de préférence 1 à 10 atomes de carbone pour des groupes sans aryle et de préférence 6 à 18 atomes de carbone pour des groupes avec aryle, et les autres radicaux et indices possèdent la signification indiquée pour la formule (V),
et
les autres radicaux et indices possèdent la signification indiquée pour la formule (V) dans la revendication 1.

4. Utilisation selon l'une quelconque des revendications précédentes, dans laquelle m est zéro dans le phosphinate de la formule (V).

5. Utilisation selon l'une quelconque des revendications précédentes, dans laquelle m est 1 et R³ est un hydrogène dans le phosphinate de la formule (V).

6. Utilisation selon l'une quelconque des revendications précédentes, dans laquelle R¹ est un phényle et R² est un alcoxyde, de préférence un méthoxyde ou un éthoxyde dans le phosphinate de la formule (V).

7. Utilisation selon l'une quelconque des revendications précédentes, dans laquelle (R¹O)(R²)P(O) est 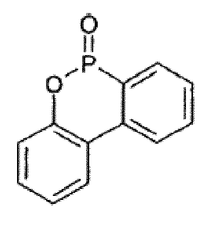 dans le phosphinate de la formule (V).

8. Utilisation selon l'une quelconque des revendications précédentes, dans laquelle les phosphinates de la formule (I) et/ou les phosphinates de la formule (V) sont utilisés pour la préparation de résines polymériques résistant à la flamme et à la rupture.

9. Utilisation selon l'une quelconque des revendications précédentes, dans laquelle les résines sont sélectionnées parmi les (méth)acrylates, les polyesters, les polyamides, les polyuréthanes et les résines de silicone.

10. Phosphinate de la formule (V)
[(R¹O)(R²)P(O)-(CHR³)ₘ-CR⁵(OR*)]ₙR⁴ (V)
dans laquelle:
R¹ et R² représentent de façon indépendante l'un de l'autre un groupe alkyle, aryle, arylalkyle, alkylaryle ou alkylarylalkyle éventuellement substitué, avec de préférence 1 à 20 atomes de carbone,
R³ et R⁵ sont de façon respectivement indépendante l'un de l'autre un hydrogène ou un groupe alkyle, aryle, arylalkyle, alkylaryle ou alkylarylalkyle éventuellement substitué, avec de préférence 1 à 20 atomes de carbone,
R⁴ représente un hydrogène ou un radical organique avec au moins un atome de carbone, qui est substitué n fois avec le radical contenant du phosphore et qui porte éventuellement d'autres substituants, dans lequel dans R⁴, lorsque ledit radical contient plus qu'un atome de carbone, des atomes de carbone voisins dans une chaîne de carbone peuvent être interrompus par des atomes d'oxygène,
des atomes de soufre ou des groupes aminés,
OR* est un radical contenant un groupe ester ou un groupe uréthane et couplé par ce groupe au reste de la molécule, et apte à être incorporé dans un polymère organique,
m est égal à 0 ou 1, et
n représente un nombre entier de 1 à 6,
dans lequel, lorsque n est supérieur à 1, R⁴ ne peut pas être un hydrogène.

11. Phosphinate selon la revendication 10 avec la formule (VII):
[(R¹O)(R²)P(O)-(CHR³)ₘ-CR⁵{-O(O)C-R**}]ₙR⁴ (VII)
ou la formule (X):
[(R¹O)(R²)P(O)-(CHR³)ₘ-CR⁵{-O(O)C-NH-R**}]ₙR⁴ (X)
dans lesquelles
R** est le radical mentionné plus haut comme constituant de R* et apte à être incorporé organiquement et les autres radicaux et indices possèdent la signification indiquée pour la formule (V).

12. Phosphinate selon la revendication 11 avec la formule (VI):
[(R¹O)(R²)P(O)-(CHR³)ₘ-CH{O(O)C-CR⁶=CH₂}]ₙR⁴ (VI)
ou la formule (IX):
[(R¹O)(R²)P(O)-(CHR³)ₘ-CH{-O-R⁷-NH₂}]ₙR⁴ (IX)
ou la formule (XI):
[(R¹O)(R²)P(O)-(CHR³)ₘ-CH{-O(O)C-NH-R⁷-Si(R⁸)₃}]ₙR⁴ (XI)
dans lesquelles
R⁶ est un hydrogène ou un méthyle,
R⁷ désigne un groupe alkylène ou arylène éventuellement substitué, avec de préférence 1 à 20 atomes de carbone, dans lesquels la chaîne de carbone peut éventuellement être interrompue par un atome d'azote, d'oxygène ou de soufre, R⁸ peut être identique ou différent et est un groupe alkyle, aryle, arylalkyle, alkylaryle, alcoxy, aryloxy ou arylalcoxy éventuellement substitué, avec de préférence 1 à 10 atomes de carbone pour des groupes sans aryle et de préférence 6 à 18 atomes de carbone pour des groupes avec aryle, et les autres radicaux et indices possèdent la signification indiquée pour la formule (V),
et
les autres radicaux et indices possèdent la signification indiquée pour la formule (V).

13. Phosphinate selon l'une quelconque des revendications 10 à 12, dans lequel m est zéro.

14. Phosphinate selon l'une quelconque des revendications 10 à 13, dans lequel m est 1 et R³ est un hydrogène.

15. Phosphinate selon l'une quelconque des revendications 10 à 14, dans lequel R¹ est un phényle et R² est un alcoxyde, de préférence un méthoxyde ou un éthoxyde.

16. Phosphinate selon l'une quelconque des revendications 10 à 14, dans lequel (R¹O)(R²)P(O) est

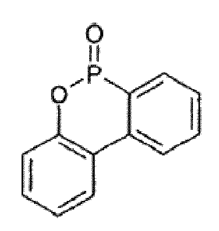

17. Utilisation d'un phosphinate de la formule (V) comme défini dans l'une quelconque des revendications 10 à 16 comme constituant d'un polymère, dans laquelle l'incorporation du composé avec la formule (V) dans ce polymère est effectuée au moyen du groupe OR* apte à être incorporé organiquement.

18. Copolymérisat, obtenu par copolymérisation d'un phosphinate de la formule (I):
[(R¹O)(R²)P(O)-(CHR³)ₘ-CR⁵(OH)]ₙR⁴ (I)
dans laquelle:
R¹ et R² représentent de façon indépendante l'un de l'autre un groupe alkyle, aryle, arylalkyle, alkylaryle ou alkylarylalkyle éventuellement substitué, avec de préférence 1 à 20 atomes de carbone,
R³ et R⁵ sont de façon respectivement indépendante l'un de l'autre un hydrogène ou un groupe alkyle, aryle, arylalkyle, alkylaryle ou alkylarylalkyle éventuellement substitué, avec de préférence 1 à 20 atomes de carbone,
R⁴ représente un hydrogène ou un radical organique avec au moins un atome de carbone, qui est substitué n fois avec le radical contenant du phosphore et qui porte éventuellement d'autres substituants, dans lequel dans R⁴, lorsqu'il contient plus qu'un atome de carbone, des atomes de carbone voisins dans une chaîne de carbone peuvent être interrompus par des atomes d'oxygène, des atomes de soufre ou des groupes aminés,
m est égal à 0 ou 1, et
n représente un nombre entier de 1 à 6,
dans lequel, lorsque n est supérieur à 1, R⁴ ne peut pas être un hydrogène,
par une estérification du/des groupe(s) hydroxyle libre(s) ou par conversion de ce/ces groupe(s) en un ou plusieurs groupe(s) uréthane,
et/ou d'un phosphinate de la formule (V):
[(R¹O)(R²)P(O)-(CHR³)ₘ-CR⁵(OR*)]ₙR⁴ (V),
dans laquelle:
OR* est un radical contenant un groupe ester ou un groupe uréthane et couplé par ce groupe au reste de la molécule, et apte à être incorporé dans un polymère organique, et les autres radicaux et indices sont définis comme pour la formule (I),
avec un ou plusieurs autres monomères, oligomères ou polymères.

19. Résine cyanate, polyuréthane ou polyester, obtenue par utilisation d'au moins un phosphinate de la formule (I) comme défini dans la revendication 1.

20. Résine cyanate, polyuréthane ou polyester selon la revendication 19, dans laquelle n est supérieur à 1 dans la formule (I).

21. Produit de polymérisation par addition ou par condensation, obtenu par utilisation d'au moins un phosphinate de la formule (V) comme défini dans la revendication 10 ou dans une revendication dépendant de celle-ci.

22. Produit de polymérisation par addition ou par condensation selon la revendication 21, dans lequel n est supérieur à 1 dans la formule (V).

23. Poly(méth)acrylate selon la revendication 21 ou 22, obtenu par utilisation d'au moins un phosphinate de la formule (VI) comme défini dans la revendication 12.

24. Hétéropolycondensat d'acide silicique selon la revendication 21 ou 22, obtenu par utilisation d'un phosphinate de la formule (XI) comme défini dans la revendication 12.

25. Procédé de préparation d'un composé de la formule (VII):
[(R¹O)(R²)P(O)-(CHR³)ₘ-CR⁵{-O(O)C-R**}]ₙR⁴ (VII)
comme défini dans la revendication 11, dans lequel on convertit un phosphinate de la formule (I) comme défini dans la revendication 1 dans des conditions d'estérification avec un acide carboxylique de la formule R**-C(O)OH ou avec une forme activée de cet acide.

26. Procédé de préparation d'un composé de la formule (X):
[(R¹O)(R²)P(O)-(CHR³)ₘ-CR⁵{-O(O)C-NH-R**}]ₙR⁴ (X)
comme défini dans la revendication 11, dans lequel on fait réagir un phosphinate de la formule (I) comme défini dans la revendication 1 avec un isocyanate de la formule R**-NCO.
